# EUROPEAN PATENT APPLICATION

(11) **EP 4 636 797 A1**
(43) Date of publication of application: **22.10.2025**
(21) Application number: 23939606.2
(22) Date of filing: 30.05.2023
(51) Int. Cl.: H01G 4/30, H01G 4/12

(54) **MULTILAYER CERAMIC CAPACITOR**

(71) Applicant: Murata Manufacturing Co., Ltd., Nagaokakyo-shi, Kyoto 617-8555 (JP)
(72) Inventor: FUKUMA, Takashi, Nagaokakyo-shi, Kyoto 617-8555 (JP)
(74) Representative: Stöckeler, Ferdinand
(86) International application number: PCT/JP2023/020169
(87) International publication number: WO 2024/247128

(57) **Abstract**

The present invention provides a multilayer ceramic capacitor capable of enhancing reliability while increasing effective capacity. A multilayer ceramic capacitor (100) comprising a laminate (6) including a plurality of dielectric layers (2) and a plurality of internal electrode layers (4) laminated in the thickness direction, and a pair of external electrodes, wherein an inner layer part (16) of the laminate (6) comprises a central region (16c) in the widthwise center, a first side margin adjacent region (16a) adjacent to a first side margin part (20a), and a second side margin adjacent region (16b) adjacent to a second side margin part (20b). The area equivalent diameter D50 of dielectric particles in dielectric layers of the first side margin adjacent region (16a) and the second side margin adjacent region (16b) is larger than the area equivalent diameter D50 of dielectric particles in the dielectric layer of the central region (16c).

## Description

### TECHNICAL FIELD

The present invention relates to a multilayer ceramic capacitor.

### BACKGROUND ART

The demand for multilayer ceramic capacitors (MLCCs) is rising more and more along with the miniaturization of electronic devices such as mobile phones and the increasing speed of CPUs. The multilayer ceramic capacitor has a structure in which dielectric layers and internal electrode layers are alternately laminated, and has a large capacitance while being small in size due to the dielectric layers formed as thin layers and having a high permittivity. While known multilayer ceramic capacitors include various materials, a multilayer ceramic capacitor including a barium titanate (BaTiO₃)-based compound in the dielectric layers is widely used because it exhibits good characteristics. For example, Patent Document 1 discloses a multilayer ceramic capacitor including a perovskite-type (ABO₃-type) barium titanate-based composite compound as dielectric layers of a multilayer body.

### Citation List

### Patent Document

Patent Document 1: Japanese Unexamined Patent Application, Publication No. 2017-178686

### DISCLOSURE OF THE INVENTION

### Problems to be Solved by the Invention

The multilayer ceramic capacitors are required to have improved effective capacitance and reliability. Here, there is an approach to reducing a capacitance change that is caused upon application of a voltage and increasing effective capacitance by lowering the relative permittivity of dielectric layers. In this approach, it is conceivable to achieve such a low relative permittivity by retarding the progress of sintering of the dielectric particles to suppress the grain growth of the dielectric particles to a low level at the end of the sintering step. In this case, however, the grain growth of the dielectric particles is suppressed to a low level not only in the inner layer portion but also in the vicinity of side margin portions; moreover, the progress of the solid solution of a rare earth element is also retarded. As a result, the reliability of the multilayer ceramic capacitor decreases.

It is an object of the present invention to provide a multilayer ceramic capacitor that can improve reliability while increasing an effective capacitance.

### Means for Solving the Problems

A multilayer ceramic capacitor according to the present invention includes: a multilayer body having a first main surface and a second main surface opposed to each other in a thickness direction, a first side surface and a second side surface opposed to each other in a width direction, and a first end surface and a second end surface opposed to each other in a length direction, the multilayer body including a plurality of dielectric layers and a plurality of internal electrode layers laminated in the thickness direction; and a pair of external electrodes respectively provided on the first end surface and the second end surface, and connected to the plurality of internal electrode layers. The multilayer body is sectioned into: a first side margin portion extending along the first side surface and not including the internal electrode layers, a second side margin portion extending along the second side surface and not including the internal electrode layers, a first outer layer portion sandwiched between the first side margin portion and the second side margin portion and sandwiched between the first main surface and the internal electrode layer closest to the first main surface, a second outer layer portion sandwiched between the first side margin portion and the second side margin portion and sandwiched between the second main surface and the internal electrode layer closest to the second main surface, and an inner layer portion sandwiched between the first side margin portion and the second side margin portion and sandwiched between the first outer layer portion and the second outer layer portion. In a cross section across a center in the length direction of the multilayer ceramic capacitor, the inner layer portion includes a central region that is located at a center in the width direction, a first side margin adjacent region that is adjacent to the first side margin portion, and a second side margin adjacent region that is adjacent to the second side margin portion. Dielectric particles in the dielectric layer in the first side margin adjacent region and the second side margin adjacent region have a larger area equivalent diameter D50 than dielectric particles in the dielectric layer in the central region.

### Effects of the Invention

The present invention provides a multilayer ceramic capacitor that can improve reliability while increasing an effective capacitance.

### BRIEF DESCRIPTION OF THE DRAWINGS

FIG. 1 is a perspective view illustrating an outer shape of a multilayer ceramic capacitor;
FIG. 2 is a cross-sectional view of the multilayer ceramic capacitor of FIG. 1, taken along line II-II;
FIG. 3 is a cross-sectional view of the multilayer ceramic capacitor of FIG. 1, taken along line III-III;
FIG. 4 is a schematic cross-sectional view of a core-shell particle;
FIG. 5 is an example of an enlarged image of a cross section of an exposed inner layer portion; and
FIG. 6 is a diagram of SEM images of a side margin portion, a side margin adjacent region of an inner layer portion, and a central region of the inner layer portion.

### PREFERRED MODE FOR CARRYING OUT THE INVENTION

A specific embodiment of the present invention (hereinafter referred to as "the present embodiment") will be described below. It should be noted that the present invention is not limited to the embodiment described below, and various modifications can be made without deviating from the spirit of the present invention.

### (1) Multilayer Ceramic Capacitor

A multilayer ceramic capacitor of the present embodiment has a first main surface and a second main surface opposed to each other in a thickness direction, a first side surface and a second side surface opposed to each other in a width direction, and a first end surface and a second end surface opposed to each other in a length direction. The multilayer ceramic capacitor includes a multilayer body including a plurality of dielectric layers and a plurality of internal electrode layers laminated in a lamination direction, and a pair of external electrodes respectively provided on the first end surface and the second end surface and connected to the plurality of internal electrode layers. Each dielectric layer includes dielectric particles. The multilayer body is sectioned into: a first side margin portion extending along the first side surface and not including the internal electrode layers; a second side margin portion extending along the second side surface and not including the internal electrode layers; a first outer layer portion sandwiched between the first side margin portion and the second side margin portion and sandwiched between the first main surface and the internal electrode layer closest to the first main surface; a second outer layer portion sandwiched between the first side margin portion and the second side margin portion and sandwiched between the second main surface and the internal electrode layer closest to the second main surface; and an inner layer portion sandwiched between the first side margin portion and the second side margin portion and sandwiched between the first outer layer portion and the second outer layer portion. In a cross section across the center in the length direction of the multilayer ceramic capacitor, the inner layer portion includes a central region that is located at the center in the width direction, a first side margin adjacent region that is adjacent to the first side margin portion, and a second side margin adjacent region that is adjacent to the second side margin portion. The dielectric particles in the dielectric layer in the first side margin adjacent region and the second side margin adjacent region have a larger area equivalent diameter D50 than the dielectric particles in the dielectric layer in the central region.

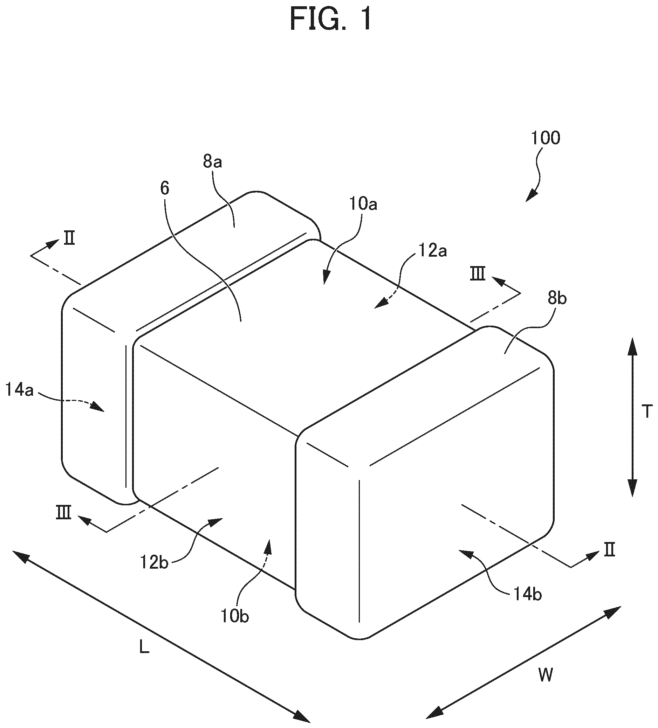

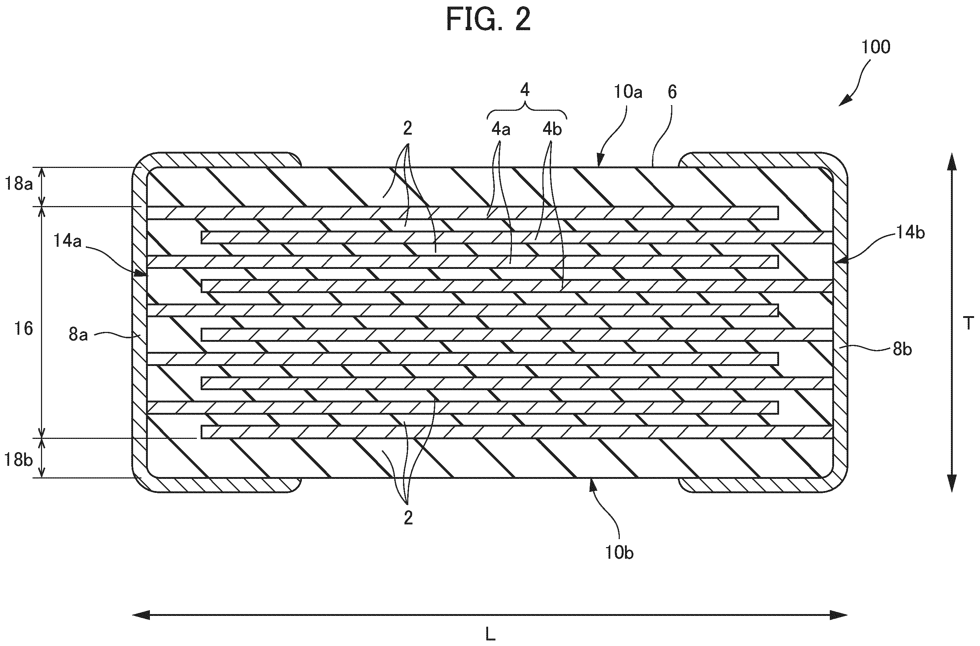

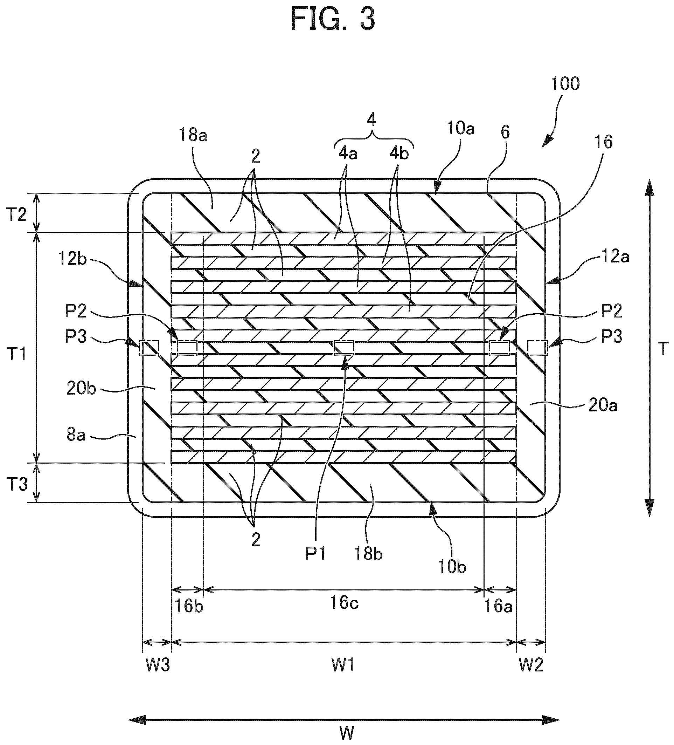

An aspect of the multilayer ceramic capacitor will be described with reference to FIGS. 1 to **3****.** FIG. 1 is a perspective view illustrating an outer shape of the multilayer ceramic capacitor. FIG. 2 is a cross-sectional view of the multilayer ceramic capacitor of FIG. 1, taken along line II-II. FIG. 3 is a cross-sectional view of the multilayer ceramic capacitor of FIG. 1, taken along line III-III.

The multilayer ceramic capacitor (100) includes a multilayer body (6) including a plurality of dielectric layers (2) and a plurality of internal electrode layers (4) that are laminated, and a pair of external electrodes (8a, 8b) provided on opposite end surfaces (14a, 14b) of the multilayer body (6). The multilayer ceramic capacitor (100) and the multilayer body (6) have a substantially rectangular parallelepiped shape. A substantially rectangular parallelepiped includes not only a rectangular parallelepiped but also a rectangular parallelepiped having rounded corners and/or rounded ridges. Here, the corner is a portion where three surfaces of the multilayer body (6) meet each other, and the ridge is a portion where two surfaces of the multilayer body (6) meet each other. Preferably, the multilayer ceramic capacitor (100) and the multilayer body (6) have a rectangular parallelepiped shape with rounded corners and/or rounded ridges.

The multilayer body (6) has a first main surface (10a) and a second main surface (10b) that are opposed to each other in a thickness direction T, a first side surface (12a) and a second side surface (12b) that are opposed to each other in a width direction W, and the first end surface (14a) and the second end surface (14b) that are opposed to each other in a length direction L. Here, the thickness direction T refers to a direction in which the dielectric layers (2) and the internal electrode layers (4) are laminated. The thickness direction T is also referred to as a lamination direction T. The length direction L refers to a direction which is orthogonal to the thickness direction T and in which the end surfaces (14a, 14b) are opposed to each other. The width direction W is a direction orthogonal to the thickness direction T and the length direction L. A plane along the thickness direction T and the width direction W is defined as a WT plane, a plane along the width direction W and the length direction L is defined as an LW plane, and a plane along the length direction L and the thickness direction T is defined as an LT plane.

The external electrodes (8a, 8b) include a first external electrode (8a) provided on the first end surface (14a) and a second external electrode (8b) provided on the second end surface (14b). The first external electrode (8a) extends over the first end surface (14a), and may further extend on a portion of the first main surface (10a), a portion of the second main surface (10b), a portion of the first side surface (12a), and a portion of the second side surface (12b). The second external electrode (8b) extends over the second end surface (14b), and may further extend on a portion of the first main surface (10a), a portion of the second main surface (10b), a portion of the first side surface (12a), and a portion of the second side surface (12b). However, the first external electrode (8a) and the second external electrode (8b) are not in contact with each other and are electrically separated from each other.

The internal electrode layers (4) include a plurality of first internal electrode layers (4a) and a plurality of second internal electrode layers (4b). Each of the first internal electrode layers (4a) and the second internal electrode layers (4b) includes a substantially rectangular counter electrode portion that faces counter electrode portions of the adjacent internal electrode layers, and a lead-out electrode portion that extends to the end surface (14a, 14b) and is connected to the external electrode (8a, 8b). In other words, the plurality of first internal electrode layers (4a) have the lead-out electrode portions extending to the first end surface (14a), and are electrically connected to the first external electrode (8a) via the lead-out electrode portions. The plurality of second internal electrode layers (4b) have the lead-out electrode portions extending to the second end surface (14b), and are electrically connected to the second external electrode (8b) via the lead-out electrode portions. The first internal electrode layers (4a) and the second internal electrode layers (4b) are alternately laminated so as to face each other with the dielectric layer (2) interposed therebetween in the thickness direction T. The first internal electrode layer (4a) and the second internal electrode layer (4b) facing each other with the dielectric layer (2) interposed therebetween are not electrically connected to each other. Therefore, when a voltage is applied via the external electrodes (8a, 8b) and the lead-out electrode portions, electric charge is accumulated between the adjacent counter electrode portions of the first internal electrode layers (4a) and the second internal electrode layers (4b). An electrostatic capacitance is generated by the accumulated electric charge, whereby a function as a capacitive element (capacitor) is fulfilled.

As illustrated in FIG. 3, the multilayer body (6) includes an inner layer portion (16), a first outer layer portion (18a), a second outer layer portion (18b), a first side margin portion (20a), and a second side margin portion (20b). The first side margin portion (20a) extends along the first side surface (12a) and is a layer-shaped region that does not include the internal electrode layers (4a, 4b). The second side margin portion (20b) extends along the second side surface (12b) and is a layer-shaped region that does not include the internal electrode layers (4a, 4b). Specifically, the first side margin portion (20a) is a region sandwiched between the first side surface (12a) and the ends of the internal electrode layers (4a, 4b) adjacent to first side surface (12a), and the second side margin portion is a region sandwiched between the second side surface (12b) and the ends of the internal electrode layers (4a, 4b) adjacent to the second side surface (12b). Furthermore, in a cross section across the center in the length direction of the multilayer ceramic capacitor (100), the inner layer portion (16) is sectioned into a central region (16c) that is located at the center in the width direction, a first side margin adjacent region (16a) that is adjacent to the first side margin portion (20a), and a second side margin adjacent region (16b) that is adjacent to the second side margin portion (20b). The first side margin adjacent region (16a) is a range up to 20 µm from the boundary between the first side margin portion (20a) and the inner layer portion (16) toward the center of the inner layer portion (16). The second side margin adjacent region (16b) is a range up to 20 µm from the boundary between the second side margin portion (20b) and the inner layer portion (16) toward the center of the inner layer portion (16).

The first outer layer portion (18a) is a region sandwiched between the first side margin portion (20a) and the second side margin portion (20b) and sandwiched between the first main surface (10a) and the internal electrode layer closest to the first main surface (10a) among the plurality of internal electrode layers (4a, 4b). The second outer layer portion (18b) is a region sandwiched between the first side margin portion (20a) and the second side margin portion (20b) and sandwiched between the second main surface (10b) and the internal electrode layer closest to the second main surface (10b) among the plurality of internal electrode layers (4a, 4b). The inner layer portion (16) is a region sandwiched between the first outer layer portion (18a) and the second outer layer portion (18b), that is, a region from the internal electrode layer closest to the first main surface (10a) to the internal electrode layer closest to the second main surface (10b). The inner layer portion functions as a capacitive element. In other words, the inner layer portion (16) that functions as a capacitive element is sandwiched between the first outer layer portion (18a) and the second outer layer portion (18b) in the lamination (thickness) direction, and the entirety of the inner layer portion and the first and second outer layer portions is sandwiched between the first side margin portion (20a) and the second side margin portion (20b) in the width direction. FIG. 3 shows a length T1 indicating a range of the inner layer portion (16) in the thickness direction T and a length W1 indicating a range of the inner layer portion (16) in the width direction W. FIG. 3 further shows a length W2 indicating a range of the first side margin portion (20a) in the width direction W and a length W3 indicating a range of the second side margin portion (20b) in the width direction W. In addition, FIG. 3 shows a length T2 indicating a range of the first outer layer portion (18a) in the thickness direction T and a length T3 indicating a range of the second outer layer portion (18b) in the thickness direction T.

The size of the multilayer ceramic capacitor (100) and that of the multilayer body (6) are not particularly limited. For example, the dimension in the length direction L is 0.2 mm or greater and 1.8 mm or less, the dimension in the width direction W is 0.1 mm or greater and 1.0 mm or less, and the dimension in the thickness direction T is 0.1 mm or greater and 1.0 mm or less. In FIGS. 1 to 3, the dimension in the length direction L is shown to be greater than the dimension in the width direction W, but the multilayer ceramic capacitor of the present embodiment is not limited to such dimensions. The dimension in the length direction L may be smaller than the dimension in the width direction W.

### <Inner Layer Portion-Dielectric layer>

The dielectric layers form the inner layer portion of the multilayer ceramic capacitor, together with the internal electrode layers. Each dielectric layer includes dielectric particles (dielectric grains). Specifically, each dielectric layer is a sintered polycrystal (ceramic) in which a large number of dielectric particles are bonded via grain boundaries and triple points. The dielectric particles are composed of a perovskite oxide and constitute a main component of each dielectric layer. Each dielectric layer can be said to be a dielectric ceramic containing a perovskite oxide as a main component. A perovskite oxide has a composition represented by the general formula: ABO₃, and has a crystal structure similar to that of cubic and analogous crystals such as a cubic crystal, a tetragonal crystal, an orthorhombic crystal, and a rhombohedral crystal at room temperature. The atoms of the A-site element (hereinafter referred to as "A-site atoms") and the atoms of the B-site element (hereinafter referred to as "B-site atoms") are ionized to occupy the A site and the B site of the perovskite structure. Here, the main component refers to a component contained at the largest content in the dielectric layers. The content of the dielectric particles (perovskite oxide) as the main component in the dielectric layers may be 50% by mass or more, 60% by mass or more, 70% by mass or more, 80% by mass or more, or 90% by mass or more.

The dielectric particles include barium (Ba) and titanium (Ti). That is, the perovskite oxide constituting the dielectric particles is a barium titanate (BaTiO₃)-based compound. BaTiO₃ exhibits large spontaneous polarization at room temperature. Thus, BaTiO₃ is a ferroelectric having a high permittivity. Inclusion of a BaTiO₃-based compound as the main component makes it possible to further increase the capacitance of the multilayer ceramic capacitor. The BaTiO₃-based compound includes not only BaTiO₃, but also a compound resulting from substitution of a different A-site element such as Sr and/or Ca for part of Ba of BaTiO₃ and a compound resulting from substitution of a different B-site element such as Zr and/or Hf for part of Ti of BaTiO₃. However, the proportion of Ba in the A-site elements is preferably 70% or more, more preferably 80% or more, and still more preferably 90% or more in terms of molar ratio. The proportion of Ti in the B-site elements is preferably 70% or more, more preferably 80% or more, and still more preferably 90% or more in terms of molar ratio.

Each dielectric layer contains a rare earth element (Re) as a subcomponent. The rare earth element (Re) is a generic term that collectively refers to scandium (Sc) of atomic number 21, yttrium (Y) of atomic number 39, and the elements belonging to the group consisting of the elements from lanthanum (La) of atomic number 57 to lutetium (Lu) of atomic number 71 in the periodic table. It is suitable that the rare earth element (Re) is one or more elements selected from the group consisting of lanthanum (La), cerium (Ce), praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb), and lutetium (Lu). It is particularly suitable for the rare earth element (Re) to include dysprosium (Dy).

The rare earth element (Re) has an effect of increasing the lifetime of the dielectric layers and improving the reliability. In BaTiO₃, Ba ions (Ba²⁺) having a large ionic radius occupy the A site, and Ti ions (Ti⁴⁺) having a small ionic radius occupy the B site. The rare earth element (Re) is usually present as positive trivalent ions (Re³⁺), which has an ionic radius of an intermediate size between those of Ba²⁺ and Ti⁴⁺. Therefore, the rare earth element forms a solid solution in BaTiO₃ to substitute for Ba and/or Ti. The rare earth element occupying the Ba site (A site) functions as a donor, and the rare earth element occupying the Ti site (B site) functions as an acceptor.

In the dielectric particles, the BaTiO₃-based dielectric ceramic contains a large number of oxygen vacancies generated in a firing step. In particular, the multilayer ceramic capacitor is fired in a weakly reducing atmosphere in the manufacturing process in order to suppress oxidation of the internal electrode layers. As a result, BaTiO₃ is reduced so that the likelihood of the generation of oxygen vacancies increases. The oxygen vacancies have a positive charge, and serve as a path for electric charge. A large number of oxygen vacancies allows a large amount of electric charge to migrate, and insulation resistance is likely to deteriorate. In particular, the oxygen vacancies easily migrate to the vicinity of the negative electrode under a high temperature environment. Therefore, when a load is applied, the number of oxygen vacancies locally increases on the negative electrode side, and the insulation resistance deteriorates. To address this issue, a rare earth element serving as a donor and/or an acceptor is added to BaTiO₃, whereby the rare earth element suppresses the generation and migration of the oxygen vacancies. As a result, the deterioration of insulation resistance and dielectric breakdown are reduced, which prolongs the high-temperature load life.

The dielectric layers further contain a first additive element (Me) as a subcomponent. The first additive element (Me) is one or more elements selected from the group consisting of manganese (Mn), vanadium (V), iron (Fe), copper (Cu), cobalt (Co), nickel (Ni), and chromium (Cr). It is suitable for the first additive element (Me) to include nickel (Ni).

The first additive element (Me) has an effect of increasing the insulation resistance (IR) of the dielectric layers. As described above, since firing is performed in a weakly reducing atmosphere in the process of manufacturing the multilayer ceramic capacitor, BaTiO₃ contained in the dielectric layers are likely to be reduced. When reduced, BaTiO₃ becomes a semiconductor, and its insulation resistance decreases to a low level. The low level insulation resistance allows a leakage current, which causes an increase in dielectric loss, to flow easily, and makes the life likely to deteriorate. The first additive element (Me) is an acceptor element that mainly forms a solid solution in the Ti site of BaTiO₃, and has an effect of improving the reduction resistance. For this reason, adding the first additive element increases the insulation resistance of the dielectric layers after firing, and as a result, the leakage current is reduced and the high-temperature load life is prolonged.

Each of the rare earth element (Re) and the first additive element (Me) may be only one kind of element, or may be a combination of a plurality of kinds of elements. It is sufficient that at least part of the rare earth element and at least part of the first additive element are contained in the dielectric particles. Parts of the elements that are not included in the dielectric particles can be present at the grain boundaries and the triple points.

The dielectric layers may contain a subcomponent other than the rare earth element (Re) and the first additive element (Me). Example of such a subcomponent include, but are not limited to, silicon (Si), magnesium (Mg), aluminum (Al), and/or compounds thereof. These subcomponents may be contained in the dielectric particles, or may be present at the grain boundaries and the triple points.

In the multilayer ceramic capacitor of the present embodiment, the dielectric layers included in the inner layer portion in a cross section across the center in the length direction contain both core-shell particles and homogeneous solid solution particles as dielectric particles. In other words, the dielectric layers in the inner layer portion contain the core-shell particles and the homogeneous solid solution particles in a mixed state. Inclusion of both the core-shell particles and the homogeneous solid solution particles at a predetermined ratio increases the permittivity and the insulation resistance of the dielectric layers and contributes to remarkable improvement of the reliability. The reason for this will be described below.

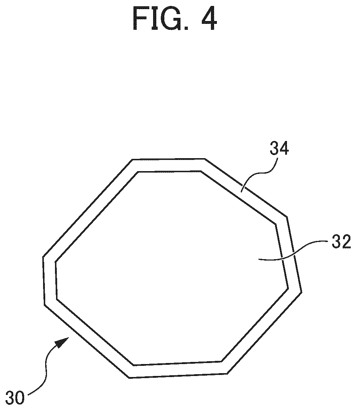

A schematic cross-sectional view of the core-shell particle is shown in FIG. 4. The core-shell particle (30) includes a core portion (32) having a low concentration of a subcomponent such as the rare earth element and a shell portion (34) formed on a surface of the core portion and having a high concentration of the subcomponent. Specifically, the core-shell particle (30) is a dielectric particle in which the molar ratio of the rare earth element (Re) with respect to titanium (Ti) in a portion (particle outer peripheral portion) located inwardly by a distance of 10 nm from the outer surface of the particle is 1.5 times or more the molar ratio of the rare earth element (Re) with respect to titanium (Ti) in a particle central portion. The core-shell particle (30) can be said to be a particle having a Re concentration distribution ratio of 1.5 or more. Here, the Re concentration distribution ratio refers to a ratio ((shell Re/Ti ratio)/(core Re/Ti ratio)), which is between a molar ratio (shell Re/Ti ratio) of the rare earth element (Re) to titanium (Ti) in the particle outer peripheral portion and a molar ratio (core Re/Ti ratio) of the rare earth element (Re) to titanium (Ti) in the particle central portion.

The dielectric particles having the core-shell structure contribute to remarkable improvement of the high-temperature load life. This is because the migration of oxygen vacancies that cause insulation deterioration is suppressed by causing the subcomponent such as a rare earth element functioning as a donor and/or an acceptor to form a solid solution in the shell portion. The concentration distribution of the first additive element (Me) in the core-shell particles is not particularly limited.

The homogeneous solid solution particle is a particle in which the subcomponent forms a homogeneous solid solution in the interior of the particle or a particle in which the subcomponent does not form a solid solution. Specifically, the homogeneous solid solution particle is a dielectric particle in which the molar ratio of the rare earth element (Re) with respect to titanium (Ti) in a portion (outer peripheral portion) located inwardly by a distance of 10 nm from the outer surface of the particle is less than 1.5 times the molar ratio of the rare earth element (Re) with respect to titanium (Ti) in a particle central portion. The homogeneous solid solution particle can be said to be a particle having a Re concentration distribution ratio ((shell Re/Ti ratio)/(core Re/Ti ratio)) of less than 1.5. The homogeneous solid solution particle is also referred to as non-core-shell particle.

The thickness of each dielectric layer is suitably 0.3 µm or greater and 5.0 µm or less, more suitably 0.4 µm or greater and 4.0 µm or less, and still more suitably 0.4 µm or greater and 3.0 µm or less. Setting the thickness of each dielectric layer to be equal to or greater than a predetermined value makes it possible to suppress the occurrence of dielectric breakdown and the life deterioration when the multilayer ceramic capacitor is in use. Setting the thickness of each dielectric layer to be equal to or less than a predetermined value allows the dielectric layer to be thinned, and makes it possible to further increase the capacitance of the multilayer ceramic capacitor. The number of dielectric layers is not particularly limited. It is suitable that the number of dielectric layers forming the outer layer portions and the inner layer portion is 100 or more and 2000 or less.

### <Inner Layer Portion-Internal Electrode Layer>

The internal electrode layers (the first internal electrode layers and the second internal electrode layers) form the inner layer portion, together with the dielectric layers. The internal electrode layers each include a counter electrode portion and a lead-out electrode portion, and the counter electrode portions of adjacent internal electrode layers sandwich the dielectric layer, thereby exhibiting the function as a capacitive element. Each lead-out electrode portion has a function of electrically connecting the counter electrode portion to the external electrode. Each internal electrode layer includes a conductive metal. As the conductive metal, a known electrode material such as nickel (Ni), copper (Cu), silver (Ag), palladium (Pd), a silver (Ag)-palladium (Pd) alloy, and/or gold (Au) may be used. However, Ni and Cu, which are base metals, are suitable from the viewpoint of cost reduction, and Ni is particularly suitable.

Each internal electrode layer may contain a component other than the conductive metal. Examples of such a component include ceramic particles serving as a co-material. By adding the co-material, the shrinkage behavior of the internal electrode layers is coordinated with that of the dielectric layers in the firing step of the process of manufacturing the multilayer ceramic capacitor, and as a result, occurrence of defects such as peeling of the internal electrode layers can be suppressed. As the ceramic particles, dielectric particles such as the BaTiO₃-based compound included in the dielectric layers are suitable. The thickness of each internal electrode layer is suitably 0.2 µm or greater and 1.5 µm or less, and more suitably 0.3 µm or greater and 1.0 µm or less. Setting the thickness of each internal electrode layer to be equal to or greater than a predetermined value makes it possible to prevent the occurrence of problems such as electrode intermittence. Setting the thickness of each internal electrode layer to be equal to or less than the predetermined value makes it possible to prevent a decrease in the proportion of the dielectric layers in the multilayer ceramic capacitor, thereby contributing to achieving a large capacitance. It is suitable that the number of internal electrode layers is 10 or more and 2000 or less.

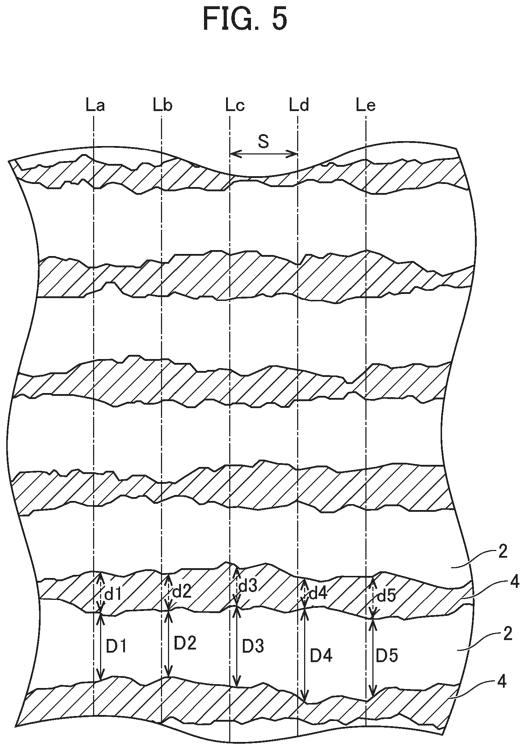

The thickness of the internal electrode layer is measured, for example, in the following manner. First, an LT cross section passing through the center of the multilayer ceramic capacitor is polished to expose the inner layer portion. If necessary, the exposed cross section may be etched to remove the internal electrode layers stretched by the polishing. FIG. 5 is an example of an enlarged image of an exposed cross section of the inner layer portion. In the enlarged image, for example, a plurality of straight lines La, Lb, Lc, Ld, and Le extending in the thickness direction T are drawn at a substantially equal pitch S. The pitch S is about 5 to 10 times the thickness of the internal electrode layer to be measured. For example, in the case of measuring the internal electrode layer having a thickness of about 1 µm, the pitch S is set to 5 µm.

Next, thicknesses d1, d2, d3, d4, and d5 of each internal electrode layer are measured on the five straight lines La, Lb, Lc, Ld, and Le, respectively. This measurement is performed on five internal electrode layers, and an average value of the measured thicknesses is defined as the thickness of the internal electrode layer of the present embodiment. However, in a case where the internal electrode layer is absent on one or more of the straight lines La, Lb, Lc, Ld, and Le, and the dielectric layers sandwiching the internal electrode layer are continuous with each other, or in a case where the enlarged view of the measurement position is unclear, new straight lines are drawn to measure the thickness of the internal electrode layers. In a case where the number of laminated internal electrode layers is less than five, the thicknesses of all the internal electrode layers are measured, and an average value thereof is defined as the thickness of the internal electrode layer of the present embodiment. The thickness of the dielectric layer can also be measured in the same manner as the internal electrode layer. Thicknesses D1, D2, D3, D4, and D5 of each dielectric layer are measured on five straight lines La, Lb, Lc, Ld, and Le, and an average value thereof is defined as the thickness of the dielectric layer of the present embodiment.

It is suitable that in a cross section across the center in the length direction of the multilayer ceramic capacitor, the positional deviation of the ends of the adjacent internal electrode layers in the width direction is 5 µm or less. In other words, the ends in the width direction of a pair of internal electrode layers adjacent each other in the up-down direction are preferably aligned with each other.

Tin (Sn) may be present at the interface between the dielectric layer and the internal electrode layer. In this case, Sn may be present in a layer-shaped form parallel to the internal electrode layers or may be present intermittently. Alternatively, Sn may form a solid solution in the internal electrode layers or may be present in the dielectric layers.

### <Outer Layer Portion>

Each outer layer portion (the first outer layer portion, the second outer layer portion) is constituted by a dielectric sandwiched between the first side margin portion and the second side margin portion and sandwiched between the main surface (the first main surface, the second main surface) and the internal electrode layer closest to the main surface. That is, the outer layer portions are provided on upper and lower ends of the inner layer portion. The outer layer portions are constituted by a dielectric ceramic and are regions that do not include the internal electrode layers therein. By providing the outer layer portions, the inner layer portion functioning as a capacitive element can be protected from above and below.

The dielectric constituting the outer layer portions includes dielectric particles containing barium (Ba) and titanium (Ti), and further includes, as subcomponents, a rare earth element (Re) and one or more first additive elements (Me) selected from the group consisting of manganese (Mn), vanadium (V), iron (Fe), copper (Cu), cobalt (Co), nickel (Ni), and chromium (Cr). That is, the dielectric includes the dielectric particles made of a BaTiO₃-based compound, and further includes the rare earth element (Re) and the first additive element (Me) as subcomponents. The dielectric may contain silicon (Si), magnesium (Mg), aluminum (Al), and/or a compound thereof or the like as a subcomponent. Details of the BaTiO₃-based compound and the subcomponents are as described for the inner layer portion.

The composition and microstructure of the outer layer portions may be the same as or different from those of the dielectric layers included in the inner layer portion. In the case where the composition of the outer layer portions is the same as that of the dielectric layers in the inner layer portion, a dielectric green sheet that is the same as a dielectric green sheet used for forming the inner layer portion can be used for forming each outer layer portion in the process of manufacturing the multilayer ceramic capacitor.

It is suitable that in a cross section across the center in the length direction of the multilayer ceramic capacitor, the dielectric constituting the outer layer portions (the first outer layer portion and the second outer layer portion) includes homogeneous solid solution particles as the dielectric particles. Inclusion of the homogeneous solid solution particles in the outer layer portions makes it possible to further improve reliability. Unlike the core-shell particles, the homogeneous solid solution particles are capable of grain growth without destroying the internal structure of the particles. Therefore, the grain growth can be sufficiently promoted in the firing step of the process of manufacturing the multilayer ceramic capacitor, and as a result, the dielectric constituting the outer layer portions can be densified. The sufficient densification of the outer layer portions makes it possible to prevent penetration of impurities such as moisture from the upper surface, and therefore, moisture resistance reliability is improved.

Details of the homogeneous solid solution particles contained in the outer layer portions are as described for the inner layer portion. That is, the homogeneous solid solution particles are dielectric particles having a Re concentration distribution ratio ((shell Re/Ti ratio)/(core Re/Ti ratio)) of less than 1.5. It is more suitable that the dielectric constituting the outer layer portions mainly contains the homogeneous solid solution particles. It is particularly suitable that the dielectric contains only the homogeneous solid solution particles. The Re concentration distribution ratio is suitably 1.0 or more and less than 1.5.

### <Side Margin Portion>

Each side margin portion (the first side margin portion, the second side margin portion) extend along the side surfaces (the first side surface, the second side surface) and is constituted by a dielectric that does not include the internal electrode layers therein. Specifically, the side margin portions are provided along the side surfaces of the multilayer ceramic capacitor so that the side margin portions sandwich the inner layer portion and the outer layer portions. The side margin portion is also referred to as a side gap. Each side margin portion (side gap) is constituted by a dielectric ceramic. By providing the side margin portions, entry of impurities such as moisture from the side surfaces can be prevented. Each side margin portion may be composed of a single layer or a multilayer body including a plurality of layers.

The dielectric constituting the side margin portions includes dielectric particles containing barium (Ba) and titanium (Ti), and further contains, as subcomponents, a rare earth element (Re) and one or more first additive elements (Me) selected from the group consisting of manganese (Mn), vanadium (V), iron (Fe), copper (Cu), cobalt (Co), nickel (Ni), and chromium (Cr). In other words, the dielectric is composed of a BaTiO₃-based compound, and further contains the rare earth element (Re) and the first additive element (Me) as subcomponents. The dielectric may contain silicon (Si), magnesium (Mg), aluminum (Al), and/or a compound thereof, or the like as a subcomponent. Details of the BaTiO₃-based compound and the subcomponents are as described for the inner layer portion.

The composition and microstructure of the side margin portions may be the same as or different from those of the dielectric layers included in the inner layer portion. The side margin portions may be integrally formed with the inner layer portion and the outer layer portions in the process of manufacturing the multilayer ceramic capacitor. In this case, the composition and microstructure of the dielectric layers constituting the side margin portions are continuous with those of the dielectric layers constituting the inner layer portion and/or the dielectric layers constituting the outer layer portions. Alternatively, the side margin portions may be formed separately from the inner layer portion and the outer layer portions. Specifically, each side margin portion can be formed in the following manner: a side margin green body is attached to each side surface of a multilayer chip that is to form the inner layer portion and the outer layer portions, thereby preparing a green base body, and then, the green base body is fired so that the side margin portions are formed. In the present embodiment, in order to appropriately control the sintered state of the dielectric particles in each region, it is preferable that an effective molar ratio of the A site to the B site of the dielectric included in the inner layer portion is different from that of the dielectric included in the side margin portions.

It is suitable that in a cross section across the center in the longitudinal direction of the multilayer ceramic capacitor, the dielectric constituting the side margin portions (the first side margin portion and the second side margin portion) includes core-shell particles and homogeneous solid solution particles as dielectric particles.

When a sufficiently high voltage is applied, the electric field intensity between the internal electrode layers increases and the electric field distribution spreads in the width direction, and as a result, the electric field is applied not only to the inside of the inner layer portion but also to the side margin portions. The formation of a solid solution of the rare earth element (Re) is promoted in the side margin portions and regions adjacent thereto, thereby making it possible to improve the reliability. In addition, the reliability is also improved by the grain growth of the dielectric particles.

Details of the core-shell particles included in the side margin portions are as described for the inner layer portion. That is, the core-shell particles are dielectric particles having a Re concentration distribution ratio ((shell Re/Ti ratio)/(core Re/Ti ratio)) of 1.5 or greater. It is more suitable that the dielectric constituting the side margin portions mainly contains the core-shell particles. It is particularly suitable that the dielectric contains only the core-shell particles. The Re concentration distribution ratio of the dielectric particles contained in the dielectric may be 1.0 or greater and 2.0 or less, 1.5 or greater and 2.0 or less, or 1.2 or greater and 1.8 or less.

### <External Electrode>

The external electrodes (the first external electrode and the second external electrode) function as input/output terminals of the multilayer ceramic capacitor. A known configuration can be adopted to the external electrodes. For example, each external electrode may include a base electrode layer and a plating layer formed on the base electrode layer.

The base electrode layer includes at least one selected from the group consisting of a baked layer, a resin layer, a thin film layer, and the like. The baked layer is formed by applying a conductive paste containing glass and metal to the multilayer body and then baking the paste. The baking may be performed simultaneously with the firing of the multilayer body, or may be performed after the firing of the multilayer body. The baked layer may be composed of a single layer or a plurality of layers. It is suitable that the metal contained in the baked layer is copper (Cu), nickel (Ni), silver (Ag), palladium (Pd), a silver (Ag)-palladium (Pd) alloy, and/or gold (Au). The resin layer includes conductive particles and a thermosetting resin. The resin layer may be composed of a single layer or a plurality of layers. The thin film layer is formed by a thin film forming method such as sputtering or vapor deposition, and is a layer made of deposited metal particles and having a thickness of 1 µm or less. It is suitable that the thin film layer has a thickness of 0.5 µm or less.

The plating layer includes a metal such as copper (Cu), nickel (Ni), tin (Sn), silver (Ag), palladium (Pd), silver (Ag)-palladium (Pd) alloy, and/or gold (Au). The plating layer may be composed of a single layer or a plurality of layers. It is suitable for the plating layer to have a two-layer structure including a Ni plating layer and a Sn plating layer. The Ni plating layer is capable of preventing the base layer from being eroded by solder when the multilayer ceramic capacitor is mounted. The Sn plating layer increases solder wettability, and therefore has an effect of facilitating mounting of the multilayer ceramic capacitor.

Each external electrode layer may be constituted by the plating layer, without the base electrode layer. In this case, the plating layer is directly formed on the multilayer body and is directly connected to the lead-out electrode portions of the internal electrode layers. However, as the pretreatment, a catalyst may be provided on the multilayer body. It is suitable for the plating layer to include a first plating layer and a second plating layer formed on the first plating layer. The first plating layer and the second plating layer each include, for example, one metal selected from the group consisting of copper (Cu), nickel (Ni), tin (Sn), lead (Pb), gold (Au), silver (Ag), palladium (Pd), bismuth (Bi), and zinc (Zn), or an alloy including any of the metals. In the case where the internal electrode layers contain Ni, the first plating layer preferably contains Cu having good bonding property with Ni. The first plating layer preferably contains Ni having good solder barrier performance. The second plating layer preferably contains Sn or Au having good solder wettability.

However, the plating layer is not limited to the structure including the first plating layer and the second plating layer. The plating layer may be constituted by only the first plating layer without the second plating layer. Another plating layer may be formed on the second plating layer. In either case, the plating layer preferably does not contain glass. The proportion of the metal in the plating layer is preferably 99% by volume or more. The plating layer is formed from particles that have grain grown in the thickness direction and have a columnar shape.

### <Details of Dielectric Particles>

Next, the dielectric of the inner layer portion and the dielectric of the first side margin portion and the second side margin portion will be described in detail.

The dielectric included in the inner layer portion and the dielectric included in the side margin portions (the first side margin portion and the second side margin portion) include dielectric particles containing barium (Ba) and titanium (Ti), and a rare earth element (Re) as a subcomponent. In the present embodiment, the rare earth element contained as the subcomponent in the dielectrics included in the inner layer portion and the side margin portions is dysprosium (Dy). The dielectric included in the inner layer portion and the dielectric included in the first side margin portion and the second side margin portion have a perovskite (ABO₃) structure.

A first effective molar ratio Rm1 indicates an effective molar ratio (A/B ratio) of the A site to the B site of the dielectric layer in the central region, and a second effective molar ratio Rm2 indicates an effective molar ratio (A/B ratio) of the A site to the B site of the dielectric layer in the first side margin adjacent region and the second side margin adjacent region. Preferably, the first effective molar ratio Rm1 is substantially equal to the second effective molar ratio Rm2. The effective molar ratio Rm1 and the effective molar ratio Rm2 are preferably 1 or greater, and more preferably 1.0000 or greater and 1.0020 or less.

A third effective molar ratio Rm3 indicates an effective molar ratio (A/B ratio) of the A site to the B site of the dielectric included in the first side margin portion and the second side margin portion, and is preferably less than **1,** and more preferably 0.990 or greater and 0.998 or less.

Here, in the present embodiment, Ba and Ca are included as elements of the A site, Ti and Zr are included as elements of the B site, and the effective molar ratios Rm1 to Rm3 are calculated according to the following: (Ba + Ca)/(Ti + Zr).

As described above, in the present embodiment, the third effective molar ratio Rm3 is less than the first effective molar ratio Rm1 and the second effective molar ratio Rm2. This configuration makes it possible to appropriately control the sintered state of the dielectric particles in each region and to improve the reliability while increasing the effective capacitance.

In the present embodiment, the difference between the third effective molar ratio Rm3 and the second effective molar ratio Rm2 is larger than the difference between the second effective molar ratio Rm2 and the first effective molar ratio Rm1.

Here, in the cross section across the center in the length direction of the multilayer ceramic capacitor, the dielectric particles in the dielectric layer in the first side margin adjacent region and the second side margin adjacent region have a larger area equivalent diameter D50 than the dielectric particles in the dielectric layer in the central region. Making the dielectric particles in the central region of the inner layer portion have a small particle diameter can reduce a capacitance change that is caused upon application of a voltage and can increase the effective capacitance. Thus, it is possible to improve the reliability while increasing the effective capacitance.

The area equivalent diameter D50 is also called a median diameter, and refers to an area equivalent diameter at which the cumulative value of the cumulative distribution of the area equivalent diameters of a plurality of dielectric particles is 50%. In other words, the area equivalent diameter D50 is an area equivalent diameter serving as a reference with respect to which a plurality of dielectric particles are divided into two groups each consisting of an equal number of dielectric particles such that the dielectric particles of one of the two groups have an area equivalent diameter larger than the reference and the dielectric particles of the other have an area equivalent diameter less than or equal to the reference.

The area equivalent diameter D50 of the dielectric particles in the dielectric layer in the first side margin adjacent region and the second side margin adjacent region is preferably 1.1 times or more, more preferably 1.1 times or more and 2.0 times or less, and still more preferably 1.2 times or more and 1.8 times or less the area equivalent diameter D50 of the dielectric particles in the dielectric layer in the central region.

In the present embodiment, the dielectric particles in the dielectric of the first side margin portion and the second side margin portion have a larger area equivalent diameter D50 than the dielectric particles in the dielectric layer in the central region. Making the dielectric particles in the central region of the inner layer portion have a small particle diameter can reduce a capacitance change that is caused upon application of a voltage and can increase the effective capacitance. Thus, it is possible to improve the reliability while increasing the effective capacitance.

The area equivalent diameter D50 of the dielectric particles in the dielectric of the first side margin portion and the second side margin portion is preferably 1.5 times or more, more preferably 1.5 times or more and 3 times or less, and still more preferably 1.5 times or more and 2.5 times or less the area equivalent diameter D50 of the dielectric particles in the dielectric layer in the central region.

The area equivalent diameter D50 of the dielectric particles in the dielectric of the first side margin portion and the second side margin portion is larger than the area equivalent diameter D50 of the dielectric particles in the dielectric layer in the first side margin adjacent region and the second side margin adjacent region. This configuration makes it possible to improve the reliability while increasing the effective capacitance.

The area equivalent diameter D50 of the dielectric particles in the dielectric in the first side margin portion and the second side margin portion is preferably 1.1 times or more, more preferably 1.1 times or more and 2.0 times or less, and still more preferably 1.2 times or more and 1.8 times or less the area equivalent diameter D50 of the dielectric particles in the dielectric layer in the first side margin adjacent region and the second side margin adjacent region.

The area equivalent diameter D50 of the dielectric particles in the dielectric layer in the central region is preferably 150 nm or greater and 350 nm or less. More preferably, it is 200 nm or greater and 300 nm or less.

The area equivalent diameter D50 of the dielectric particles in the dielectric layer in the first side margin adjacent region and the second side margin adjacent region is preferably 200 nm or greater and 500 nm or less. More preferably, it is 200 nm or greater and 400 nm or less. In the first side margin adjacent region and the second side margin adjacent region, the area equivalent diameter D50 of the dielectric particles may gradually decrease toward the central region. Specifically, in these regions, the area equivalent diameter D50 of the dielectric particles may become smaller as the distance to the central region decreases, and may become larger as the distance to the first side margin portion or the second side margin portion decreases.

The area equivalent diameter D50 of the dielectric particles in the dielectric of the first side margin portion and the second side margin portion is preferably 300 nm or greater and 500 nm or less. More preferably, it is 350 nm or greater and 450 nm or less.

Here, in the cross section across the center in the length direction of the multilayer ceramic capacitor, the dielectric particles in the dielectric layer in the first side margin adjacent region and the second side margin adjacent region have a larger area equivalent diameter D90 than the dielectric particles in the dielectric layer in the central region. Making the dielectric particles in the central region of the inner layer portion have a small particle diameter can reduce a capacitance change that is caused upon application of a voltage and can increase the effective capacitance. Thus, it is possible to improve the reliability while increasing the effective capacitance.

The area equivalent diameter D90 refers to an area equivalent diameter at which the cumulative value of the cumulative distribution of the area equivalent diameters of a plurality of dielectric particles is 90%. In other words, the area equivalent diameter D90 is such a value that the proportion of the dielectric particles having an area equivalent diameter less than or equal to the value is 90%.

The area equivalent diameter D90 of the dielectric particles in the dielectric layer in the first side margin adjacent region and the second side margin adjacent region is preferably 1.1 times or more, more preferably 1.1 times or more and 2.0 times or less, and still more preferably 1.2 times or more and 1.8 times or less the area equivalent diameter D90 of the dielectric particles in the dielectric layer in the central region.

In the present embodiment, the dielectric particles in the dielectric of the first side margin portion and the second side margin portion have a larger area equivalent diameter D90 than the dielectric particles in the dielectric layer in the central region. Making the dielectric particles in the central region of the inner layer portion have a small particle diameter can reduce a capacitance change that is caused upon application of a voltage and can increase the effective capacitance. Thus, it is possible to improve the reliability while increasing the effective capacitance.

The area equivalent diameter D90 of the dielectric particles in the dielectric of the first side margin portion and the second side margin portion is preferably **1.5** times or more, more preferably 1.5 times or more and 3 times or less, and still more preferably 1.5 times or more and 2.5 times or less the area equivalent diameter D90 of the dielectric particles in the dielectric layer in the central region.

The area equivalent diameter D90 of the dielectric particles in the dielectric of the first side margin portion and the second side margin portion is larger than the area equivalent diameter D90 of the dielectric particles in the dielectric layer in the first side margin adjacent region and the second side margin adjacent region. This configuration makes it possible to improve the reliability while increasing the effective capacitance.

The area equivalent diameter D90 of the dielectric particles in the dielectric in the first side margin portion and the second side margin portion is preferably 1.1 times or more, more preferably 1.1 times or more and 2.0 times or less, and still more preferably 1.2 times or more and 1.8 times or less the area equivalent diameter D90 of the dielectric particles in the dielectric layer in the first side margin adjacent region and the second side margin adjacent region.

The area equivalent diameter D90 of the dielectric particles in the dielectric layer in the central region is preferably 250 nm or greater and 600 nm or less. More preferably, it is 300 nm or greater and 500 nm or less.

The area equivalent diameter D90 of the dielectric particles in the dielectric layer in the first side margin adjacent region and the second side margin adjacent region is preferably 350 nm or greater and 600 nm or less. More preferably, it is 400 nm or greater and 550 nm or less. In the first side margin adjacent region and the second side margin adjacent region, the area equivalent diameter D90 of the dielectric particles may gradually decrease toward the central region. Specifically, in these regions, the area equivalent diameter D90 of the dielectric particles may become smaller as the distance to the central region decreases, and may become larger as the distance to the first side margin portion or the second side margin portion decreases.

The area equivalent diameter D90 of the dielectric particles in the dielectric of the first side margin portion and the second side margin portion is preferably 450 nm or greater and 750 nm or less. More preferably, it is 500 nm or greater and 700 nm or less.

The dielectric particles of the dielectric of the inner layer portion and the dielectric particles of the dielectric of the first side margin portion and the second side margin portion include core-shell particles and homogeneous solid solution particles.

Here, a ratio of an area (As1) occupied by the homogeneous solid solution particles to an area (Ac1) occupied by the core-shell particles in the dielectric layer in the central region is defined as RA1 (= As1/Ac1). A ratio of an area (As2) occupied by the homogeneous solid solution particles to an area (Ac2) occupied by the core-shell particles in the dielectric layer in the first side margin adjacent region and the second side margin adjacent region is defined as RA2 (= As2/Ac2). A ratio of an area (As3) occupied by the homogeneous solid solution particles to an area (Ac3) occupied by the core-shell particles in the dielectric of the first side margin portion and the second side margin portion is defined as RA3 (= As3/Ac3).

The ratio RA2 (= As2/Ac2) of the area (As2) occupied by the homogeneous solid solution particles to the area (Ac2) occupied by the core-shell particles in the dielectric layer in the first side margin adjacent region and the second side margin adjacent region is greater than the ratio RA1 (= As1/Ac1) of the area (As1) occupied by the homogeneous solid solution particles to the area (Ac1) occupied by the core-shell particles in the dielectric layer in the central region. Increasing the degree of solid solution of the rare earth element with respect to the dielectric particles in the dielectric layers in the first side margin adjacent region and the second side margin adjacent region enables improvement of the reliability. Thus, it is possible to improve the reliability while increasing the effective capacitance.

The ratio RA3 (= As3/Ac3) of the area (As3) occupied by the homogeneous solid solution particles to the area (Ac3) occupied by the core-shell particles in the dielectric of the first side margin portion and the second side margin portion is greater than the ratio RA1 (= As1/Ac1) of the area (As1) occupied by the homogeneous solid solution particles to the area (Ac1) occupied by the core-shell particles in the dielectric layer in the central region. Increasing the degree of solid solution of the rare earth element with respect to the dielectric particles in the dielectric of the first side margin portion and the second side margin portion enables improvement of the reliability. Thus, it is possible to improve the reliability while increasing the effective capacitance.

The ratio RA3 (= As3/Ac3) of the area (As3) occupied by the homogeneous solid solution particles to the area (Ac3) occupied by the core-shell particles in the dielectric of the first side margin portion and the second side margin portion is greater than the ratio RA2 (= As2/Ac2) of the area (As2) occupied by the homogeneous solid solution particles to the area (Ac2) occupied by the core-shell particles in the dielectric layer in the first side margin adjacent region and the second side margin adjacent region. Increasing the degree of solid solution of the rare earth element with respect to the dielectric particles in the dielectric of the first side margin portion and the second side margin portion enables improvement of the reliability. Thus, it is possible to improve the reliability while increasing the effective capacitance.

As described above, it is preferable that the degree of solid solution of the rare earth element with respect to the dielectric particles in the dielectric layer in the first side margin adjacent region and the second side margin adjacent region is higher than the degree of solid solution of the rare earth element with respect to the dielectric particles in the dielectric layer in the central region. It is preferable that the degree of solid solution of the rare earth element with respect to the dielectric particles in the dielectric of the first side margin portion and the second side margin portion is higher than the degree of solid solution of the rare earth element with respect to the dielectric particles in the dielectric layer in the first side margin adjacent region and the second side margin adjacent region.

The ratio RA1 (= As1/Ac1) of the area (As1) occupied by the homogeneous solid solution particles to the area (Ac1) occupied by the core-shell particles in the dielectric layer in the central region is preferably less than 1, and more preferably 0.8 or less.

The ratio RA2 (= As2/Ac2) of the area (As2) occupied by the homogeneous solid solution particles to the area (Ac2) occupied by the core-shell particles in the dielectric layer in the first side margin adjacent region and the second side margin adjacent region is preferably greater than 1, and more preferably 1.2 or greater.

The ratio RA3 (= As3/Ac3) of the area (As3) occupied by the homogeneous solid solution particles to the area (Ac3) occupied by the core-shell particles in the dielectric of the first side margin portion and the second side margin portion is preferably greater than 1, and more preferably 1.5 or greater.

### <Measurement Methods>

Area Equivalent Diameter D50 and Area Equivalent Diameter D90 A method of measuring the area equivalent diameter D50 and the area equivalent diameter D90 will be described. FIG. 3 is a cross-sectional view illustrating a cross section (WT plane) across the center in the length direction of the multilayer ceramic capacitor. First, the multilayer ceramic capacitor is processed so that a plane (WT plane) is exposed which crosses the center in the length direction and extends in the width direction and the thickness direction. Next, observation with a scanning electron microscope (SEM) is performed on the WT plane as an observation surface.

For the central region of the inner layer portion, the SEM observation is performed on the position denoted by P1 in FIG. 3. More specifically, the SEM observation is performed on the center of the inner layer portion in both the thickness direction and the width direction. The observation is performed in a field of view of 5000 nm×5000 nm. However, in a case where only the internal electrode layer exists at the position P1 and the dielectric layer cannot be observed there, the SEM observation is performed on the dielectric layer adjacent to the internal electrode layer existing at the position P1.

For the side margin adjacent regions of the inner layer portion, the SEM observation is performed on the positions (two positions) denoted by P2 in FIG. 3. More specifically, the SEM observation is performed on the positions each of which is at the center in the thickness direction of the inner layer portion and at the center in the width direction of the respective side margin adjacent portion (i.e., positions each of which is at 10 µm from the boundary between the inner layer portion and the respective side margin portion toward the center of the inner layer portion). The observation is performed in a field of view of 5000 nm×5000 nm. However, in a case where only the internal electrode layer exists at the positions P2 and the dielectric layer cannot be observed there, the SEM observation is performed on the dielectric layer adjacent to the internal electrode layer existing at the positions P2.

For the side margin portions, the SEM observation is performed on the positions (two positions) denoted by P3 in FIG. 3. More specifically, the SEM observation is performed on the positions each of which is at the center in the thickness direction of the respective side margin portion and is farthest in the width direction from the end of the internal electrode layer, that is, positions in the vicinities of the surfaces of the multilayer body (a position in the first side margin portion and in the vicinity of the first side surface, and a position in the second side margin portion and in the vicinity of the second side surface). The observation is performed in a field of view of 5000 nm×5000 nm.

The average particle diameter, the area equivalent diameter D50, and the area equivalent diameter D90 can be determined based on the cross-sectional area of each of the dielectric particles observed within the field of view of 5000 nm×5000 nm in the above-described SEM observation.

First, for each dielectric particle in the field of view, the area equivalent diameters are calculated based on a cross-sectional area of the dielectric particle. The area equivalent diameter refers to the value of the diameter of the perfect circle having an area equal to the area of the dielectric particle defined by the contour of the dielectric particle.

The area equivalent diameter D50 is calculated based on the data regarding the area equivalent diameter of each of the dielectric particles in the field of view. The area equivalent diameter D50 is also called a median diameter, and is calculated as an area equivalent diameter at which a cumulative value is calculated to be 50% for the number-based cumulative distribution of the area equivalent diameters of the plurality of dielectric particles in the field of view. The area equivalent diameter D90 is calculated based on the data regarding the area equivalent diameter of each of the dielectric particles in the field of view. The area equivalent diameter D90 is calculated as an area equivalent diameter at which a cumulative value is calculated to be 90% for the number-based cumulative distribution of the area equivalent diameters of the plurality of dielectric particles in the field of view.

The area equivalent diameter D50 and the area equivalent diameter D90 of the dielectric particles in the dielectric included in the central region of the inner layer portion are calculated based on the dielectric particles in the dielectric in the SEM image of the position P1 described above. The area equivalent diameter D50 and the area equivalent diameter D90 of the dielectric particles in the dielectric included in the side margin adjacent regions of the inner layer portion are calculated as an average value of the values respectively calculated for the two positions P2. The area equivalent diameter D50 and the area equivalent diameter D90 of the dielectric particles in the dielectric in the side margin portions in the vicinities of the surfaces of the multilayer body are calculated as an average value of the values respectively calculated for the two positions P3.

### Core-Shell Particles and Homogeneous Solid Solution Particles

Next, a method of discriminating between the core-shell particle and the homogeneous solid solution particle and a method of calculating a ratio of the area occupied by the homogeneous solid solution particles to the area occupied by the core-shell particles will be described. FIG. 3 is a cross-sectional view illustrating a cross section (WT plane) across the center in the length direction of the multilayer ceramic capacitor. First, the multilayer ceramic capacitor is processed so that a plane (WT plane) is exposed which crosses the center in the length direction and extends in the width direction and the thickness direction. Next, flake samples having a WT plane to be observed are taken out. The flake samples are taken from the positions P1, P2 (two positions), and P3 (two positions) described above. However, in a case where only the internal electrode layer exists at the center in the width direction and in the thickness direction of the inner layer portion and the dielectric layer cannot be observed there, a flake sample is taken from the dielectric layer adjacent to the internal electrode layer. The taken flake samples are observed with a transmission electron microscope (TEM). The observation is performed in a field of view of 1000 nm×1000 nm.

Subsequently, each of the dielectric particles in the dielectric layer included in the field of view is subjected to an elemental analysis by TEM-EDX. The elemental analysis is performed on a central portion (particle center) and a portion located inwardly by a distance of 10 nm from the outer surface (particle outer peripheral portion) of each particle. However, a particle whose shape is so irregular that its central portion cannot be determined is excluded from the analysis, or is analyzed in a portion located inwardly by a distance of 20 nm. A Particle having a Re concentration distribution ratio of 1.5 or more is determined to be the core-shell particle, and a particle having a Re concentration distribution ratio of less than 1.5 is determined to be the homogeneous solid solution particle.

Next, based on the TEM images, the area occupied by each of the plurality of homogeneous solid solution particles in the cross section for each of the positions P1, P2 (two positions), and P3 (two positions). The measured areas are summed to determine the areas (As1, As2, As3) occupied by the homogeneous solid solution particles. Likewise, the area occupied by each of the plurality of core-shell particles in the cross section is measured based on the TEM images for each of the positions P1, P2 (two positions), and P3 (two positions). The measured areas are summed to determine areas (Ac1, Ac2, Ac3) occupied by the core-shell particles. For each of the three types of positions P1, P2 (two positions), and P3 (two positions), the ratio (RA1 = As1/Ac1, RA2 = As2/Ac2, RA3 = As3/Ac3) of the area occupied by the homogeneous solid solution particles to the area occupied by the core-shell particles is obtained by dividing the area (As1, As2, As3) occupied by the homogeneous solid solution particles by the area (Ac1, Ac2, Ac3) occupied by the core-shell particles.

The above-described ratio, RA1 = As1/Ac1, in the central region of the inner layer portion is calculated based on the dielectric particles in the dielectric in the TEM image of the position P1 described above. The above-described ratio, RA2 = As2/Ac2, in the side margin adjacent regions of the inner layer portion is calculated as an average value of the values respectively calculated for the two positions P2 described above. The above-described ratio, RA3 = As3/Ac3, in the side margin portions is calculated as an average value of the values respectively calculated for the two positions P3 described above.

### Concentration of Elements in Dielectric

Samples are taken by scraping part of the dielectric layer off from the above-described positions P1, P2 (two positions), and P3 (two positions) of the multilayer ceramic capacitor, and are subjected to an ICP analysis so that a concentration of each element in the dielectric is determined. Specifically, the scraped samples are treated with a solution by alkali fusion method, and the solution is subjected to the ICP analysis. In the ICP analysis, the effective molar ratio (Rm1, Rm2, Rm3) of the A site to the B site is calculated for each of the three types of positions P1, P2 (two positions), and P3 (two positions). More specifically, the first effective molar ratio Rm1 indicating the effective molar ratio (A/B ratio) of the A site to the B site in the dielectric layer in the central region, the second effective molar ratio Rm2 indicating the effective molar ratio (A/B ratio) of the A site to the B site in the first side margin adjacent region and the second side margin adjacent region, and the third effective molar ratio Rm3 indicating the effective molar ratio (A/B ratio) of the A site to the B site in the dielectric included in the first side margin portion and the second side margin portion are calculated.

The effective molar ratio Rm1 in the central region of the inner layer portion is calculated based on the analysis of the sample taken from the position P1. The effective molar ratio Rm2 in the side margin adjacent regions of the inner layer portion is calculated as an average value of the values calculated for the two positions P2. The effective molar ratio Rm3 in the side margin portions is calculated as an average value of the values calculated for the two positions P3.

### (2) Method of Manufacturing Multilayer Ceramic Capacitor

The multilayer ceramic capacitor of the present embodiment can be manufactured by any method without particular limitation as long as the requirements described above are satisfied. However, a suitable manufacturing method includes the following steps: a step of preparing a main component raw material (preparation step); a step of mixing a subcomponent raw material with the main component raw material, thereby preparing a dielectric raw material (mixing step); a step of adding a binder and a solvent to the dielectric raw material and mixing them to prepare a slurry, and molding the slurry into dielectric green sheets (molding step); a step of printing an internal electrode-forming conductive paste to form a patterned paste layer on a surface of the dielectric green sheets (printing step); a step of laminating and press-bonding the plurality of dielectric green sheets, thereby forming a multilayer block (lamination step); a step of cutting the obtained multilayer block into multilayer chips (cutting step); a step of preparing side margin green bodies, followed by attaching the side margin green bodies to side surfaces of the multilayer chips, thereby producing green base bodies (side margin portion forming step); a step of subjecting the obtained green base bodies to a binder removal treatment and firing, thereby producing multilayer bodies (firing step); and a step of forming external electrodes on the obtained multilayer bodies, thereby fabricating the multilayer ceramic capacitors (external electrode forming step). Details of each step will be described below.

### <Preparation Step>

In the preparation step, the main component raw material is prepared. The main component raw material is to constitute a main component of the dielectric layers to be included in the inner layer portion and a main component of the dielectric to constitute the outer layer portions. As the main component raw material, a BaTiO₃-based compound powder having a perovskite structure (ABO₃) can be used. The BaTiO₃-based compound is suitably synthesized by a known method such as a solid phase reaction method, a hydrothermal synthesis method, an oxalate method, an alkoxide method or the like. A first additive element (Me) may be added when the main component raw material is synthesized.

### <Mixing Step>

In the mixing step, the subcomponent raw material (Re or the like) other than the main component raw material is mixed with the main component raw material, thereby preparing a dielectric raw material. As the subcomponent raw material, a known ceramic raw material such as an oxide, a carbonate, a hydroxide, a nitrate, an organic acid salt, an alkoxide, and/or a chelate compound is suitably used. The mixing method is not particularly limited. For example, a method can be used which includes wet-mixing the weighed main component raw material and subcomponent raw material together with a pulverizing medium and pure water using a ball mill, and pulverizing the resulting mixture
In the case of the wet-mixing, the resulting mixture is dried.

### <Molding Step>

In the molding step, the binder and the solvent are added to, and mixed with, the dielectric raw material to prepare a slurry, and the slurry is molded into dielectric green sheets. After being subjected to the later firing, the dielectric green sheets form the dielectric layers included in the inner layer portion and constitute the dielectric of the outer layer portions of the multilayer ceramic capacitor. As the binder, a known organic binder such as a polyvinyl butyral binder or the like is suitably used. As the solvent, a known organic solvent such as toluene, ethanol, or the like is suitably used. If necessary, an additive such as a plasticizer or the like may be added. The molding is suitably performed by a known method such as RIP method or the like. The molded sheet has a thickness of, for example, 10 µm or less.

### <Printing Step>

In the printing step, the internal electrode-forming conductive paste is printed to form a patterned paste layer on a surface of the dielectric green sheets. The paste layer forms an internal electrode layer after being subjected to the later firing. As a conductive metal contained in the conductive paste, a conductive material such as nickel (Ni), copper (Cu), silver (Ag), palladium (Pd), an alloy containing any of these, or the like is suitably used. However, nickel (Ni) is preferred. Ceramic particles serving as a co-material may be added to the conductive paste. As the ceramic particles, the main component raw material of the dielectric layers can be used. The paste layer may be formed by any method without particular limitation. Examples of the method include screen printing, gravure printing, and the like.

### <Lamination Step>

In the lamination step, the plurality of dielectric green sheets are laminated and pressure-bonded, thereby forming a multilayer block. At this time, the laminated plurality of dielectric green sheets having the paste layer formed thereon are sandwiched from above and below by the dielectric green sheets devoid of the paste layer. The green sheet devoid of the paste layer form the outer layer portions of the multilayer ceramic capacitor after being subjected to the later firing. On the other hand, the green sheets having the paste layer formed thereon form the inner layer portion of the multilayer ceramic capacitor. It is suitable to adjust the number of green sheets to be laminated such that a required capacitance is obtained.

### <Cutting Step>

In the cutting step, the obtained multilayer block is cut into multilayer chips. It is suitable to perform the cutting so that multilayer chips of a predetermined size are obtained and at least a part of the paste layers are exposed on the end surfaces of the multilayer chips.

### <Side Margin Portion forming Step>

In the side margin portion forming step, the side margin green bodies are prepared, and then, are attached to the side surfaces of the multilayer chips, thereby forming green base bodies. The side margin green bodies form the side margin portions of the multilayer ceramic capacitor after being subjected to the later firing. As raw materials (side margin raw materials) of the side margin green body, the main component raw material and the subcomponent raw material that are used for forming the dielectric layers of the inner layer portion can be used. However, the composition of the side margin portions do not have to be the same as, and may be different from, that of the inner layer portion.

The side margin green bodies may be prepared and attached by known methods. For example, green sheets are produced from a side margin raw material powder, and the green sheets are bonded to the side surfaces of the multilayer chips. At this time, in order to ensure adhesion of the green sheets, an adhesion aid such as an organic solvent may be applied to the side surfaces of the multilayer chips in advance. Alternatively, a paste is prepared from the side margin raw material powder, and the paste is applied to the side surfaces of the multilayer chips and dried. The side margin green body may be composed of a single layer or a laminate including a plurality of layers. The side margin green body composed of the laminate can be obtained by a method of laminating a plurality of green sheets on the side surfaces of the multilayer chip or a method of repeating application and drying of a paste. The paste layers exposed on the side surfaces of the multilayer chips are covered with the side margin green bodies.

If necessary, the green base bodies are subjected to barrel polishing. In this processing, the corners and/or ridges of the multilayer bodies can be rounded.

### <Firing Step>

In the firing step, the green base bodies are subjected to a binder removal treatment and firing, thereby producing multilayer bodies. The paste layers and the dielectric green sheets are co-sintered by the firing to form internal electrode layers and dielectric layers, respectively. The condition of the binder removal treatment is suitably determined according to the type of the organic binder contained in the green sheets and the paste layers. It is suitable to perform the firing at a temperature at which the multilayer chips are sufficiently densified. For example, the firing is suitably performed at a temperature of 1200°C or higher and 1300°C or lower for a predetermined time. The firing is performed in an atmosphere in which the BaTiO₃-based compound as the main component is not reduced and oxidation of the conductive material is suppressed. For example, the firing is suitably performed in an N₂-H₂-H₂O gas stream having an oxygen partial pressure of 1.8×10⁻⁹ MPa to 8.7×10⁻¹⁰ MPa. Furthermore, an annealing treatment may be performed after the firing. In this way, the multilayer ceramic capacitor can be fabricated.

In the manufacturing method according to the present embodiment, it is preferable to add a subcomponent including one or more elements selected from silicon (Si), magnesium (Mg), and aluminum (Al) and a rare earth element (Re) to the dielectric raw material that forms the outer layer portions and the inner layer portion and the side margin raw material that forms the side margin portions. Here, Si functions as a grain growth accelerator, and Mg functions as a grain growth inhibitor.

When the grain growth of the dielectric particles is promoted during the firing, the dielectric particles increase in size while incorporating the subcomponent elements from the surroundings into the surface layer of the dielectric particles. This leads to tendency to forming the homogeneous solid solution particles. On the other hand, when grain growth is inhibited, incorporation of the subcomponent elements is suppressed, thereby leading to the likelihood that the core-shell particles are formed. Thus, adding an adjusted amount of Si having the effect of promoting the grain growth and/or an adjusted amount of Mg having the effect of inhibiting the grain growth make it possible to control the proportion of the core-shell particles and that of the homogeneous solid solution particles in the inner layer portion, the outer layer portions, and the side margin portions.

In particular, it is preferable that a large amount of Si is contained in the dielectric material that forms the outer layer portions. This promotes the grain growth in the outer layer portions, and makes it possible to cause the outer layer portions to contain a large quantity of homogeneous solid solution particles. Furthermore, since Si diffuses from the outer layer portions to the inner layer portion during the firing, the proportion of the homogeneous solid solution particles increases in inner regions of the inner layer portion that are in the vicinities of the interfaces with the outer layer portions. In the present embodiment, in order to appropriately control the sintered state of the dielectric particles in each region, the blending amount of the side margin raw material is adjusted and the firing conditions are adjusted so that the effective molar ratio of the A site to the B site in the dielectric included in the side margin portions is less than the effective molar ratio of the A site to the B site in the dielectric included in the inner layer portion.

### <External Electrode Forming Step>

In the external electrode forming step, the external electrodes are formed on the multilayer body, thereby producing the multilayer ceramic capacitor. The external electrodes are suitably formed by a known method. For example, a base layer is formed by applying and baking a conductive paste containing a conductive component such as Cu, Ni, or the like as a main component to the end surfaces of the multilayer body to which the internal electrode layers are led out to be exposed. The base layer may be formed by a method that includes applying the conductive paste to the opposed end surfaces of the green base body before the firing, and thereafter, performing the firing process. After the base layer is formed, electrolytic plating may be performed to form a plating film of Ni, Sn, or the like on the surface of the base layer. Thus, a multilayer ceramic capacitor is fabricated.

The multilayer ceramic capacitor 100 of the present embodiment provides the following effects.
(1) The multilayer ceramic capacitor (100) of the present embodiment includes: a multilayer body (6) having a first main surface (10a) and a second main surface (10b) opposed to each other in a thickness direction, a first side surface (12a) and a second side surface (12b) opposed to each other in a width direction, and a first end surface (14a) and a second end surface (14b) opposed to each other in a length direction, the multilayer body (6) including a plurality of dielectric layers (2) and a plurality of internal electrode layers (4) laminated in the thickness direction; and a pair of external electrodes (8a, 8b) respectively provided on the first end surface (14a) and the second end surface (14b), and connected to the plurality of internal electrode layers (4). The multilayer body (6) is sectioned into: a first side margin portion (20a) extending along the first side surface (12a) and not including the internal electrode layers (4); a second side margin portion (20b) extending along the second side surface (12b) and not including the internal electrode layers (4); a first outer layer portion (18a) sandwiched between the first side margin portion (20a) and the second side margin portion (20b) and sandwiched between the first main surface (10a) and the internal electrode layer (4) closest to the first main surface (10a); a second outer layer portion (18b) sandwiched between the first side margin portion (20a) and the second side margin portion (20b) and sandwiched between the second main surface (10b) and the internal electrode layer (4) closest to the second main surface (10b); and an inner layer portion (16) sandwiched between the first side margin portion (20a) and the second side margin portion (20b) and sandwiched between the first outer layer portion (18a) and the second outer layer portion (18b). In a cross section across a center in the length direction of the multilayer ceramic capacitor of the present embodiment (100), the inner layer portion (16) includes a central region (16c) that is located at a center in the width direction, a first side margin adjacent region (16a) that is adjacent to the first side margin portion (20a), and a second side margin adjacent region (16b) that is adjacent to the second side margin portion (20b). Dielectric particles in the dielectric layer (2) in the first side margin adjacent region (16a) and the second side margin adjacent region (16b) have a larger area equivalent diameter D50 than dielectric particles in the dielectric layer (2) in the central region (16c). This feature makes it possible to improve the reliability while increasing the effective capacitance.
(2) In the multilayer ceramic capacitor (100) of the present embodiment, dielectric particles in the dielectric of the first side margin portion (20a) and the second side margin portion (20b) have a larger area equivalent diameter D50 than the dielectric particles in the dielectric layer (2) in the first side margin adjacent region (16a) and the second side margin adjacent region (16b). This feature makes it possible to improve the reliability while increasing the effective capacitance.
(3) In the multilayer ceramic capacitor (100) of the present embodiment, the dielectric included in the inner layer portion (16) includes dielectric particles containing barium (Ba) and titanium (Ti) and includes a rare earth element (Re) as a subcomponent, and the dielectric particles of the dielectric in the inner layer portion (16) include core-shell particles and homogeneous solid solution particles. A ratio RA2 (= As2/Ac2) of an area (As2) occupied by the homogeneous solid solution particles to an area (Ac2) occupied by the core-shell particles in the dielectric layer (2) in the first side margin adjacent region (16a) and the second side margin adjacent region (16b) is greater than a ratio RA1 (= As1/Ac1) of an area (As1) occupied by the homogeneous solid solution particles to an area (Ac1) occupied by the core-shell particles in the dielectric layer (2) in the central region (16c). This feature makes it possible to further improve the reliability.
(4) In the multilayer ceramic capacitor (100) of the present embodiment, the dielectric included in the first side margin portion (20a) and the second side margin portion (20b) includes dielectric particles containing barium (Ba) and titanium (Ti) and includes a rare earth element (Re) as a subcomponent, and the dielectric particles in the dielectric of the first side margin portion (20a) and the second side margin portion (20b) include core-shell particles and homogeneous solid solution particles. A ratio RA3 (= As3/Ac3) of an area (As3) occupied by the homogeneous solid solution particles to an area (Ac3) occupied by the core-shell particles of the dielectric in the first side margin portion (20a) and the second side margin portion (20b) is greater than the ratio RA2 (= As2/Ac2) of the area (As2) occupied by the homogeneous solid solution particles to the area (Ac2) occupied by the core-shell particles in the dielectric layer (2) in the first side margin adjacent region (16a) and the second side margin adjacent region (16b). This feature makes it possible to further improve the reliability.
(5) The rare earth element (Re) in the multilayer ceramic capacitor (100) of the present embodiment includes dysprosium (Dy). This feature makes it possible to further improve the reliability.
(6) In the multilayer ceramic capacitor (100) of the present embodiment, the dielectric included in the inner layer portion (16) has a perovskite (ABO₃) structure, and the dielectric included in the first side margin portion (20a) and the second side margin portion (20b) has a perovskite (ABO₃) structure. A third effective molar ratio Rm3 indicating an effective molar ratio (A/B ratio) of the A site to the B site of the dielectric included in the first side margin portion (20a) and the second side margin portion (20b) is less than a second effective molar ratio Rm2 indicating an effective molar ratio (A/B ratio) of the A site to the B site of the dielectric included in the first side margin adjacent region (16a) and the second side margin adjacent region (16b). The third effective molar ratio Rm3 indicating the effective molar ratio (A/B ratio) of the A site to the B site of the dielectric included in the first side margin portion (20a) and the second side margin portion (20b) is less than a first effective molar ratio Rm1 indicating an effective molar ratio (A/B ratio) of the A site to the B site of the dielectric layer in the central region (16c). This feature makes it possible to appropriately control the sintered state of the dielectric particles in each region and improve the reliability, while increasing the effective capacitance.

### EXAMPLES

The present embodiment will be described more specifically based on the following examples. However, it should be noted that the present invention is not limited to the following examples.

### (1) Fabrication of Multilayer Ceramic Capacitors

### [Examples 1 to 5]

Multilayer ceramic capacitors each containing a BaTiO₃-based compound as a main component of the inner layer portion, the outer layer portions, and the side margin portions were fabricated and evaluated. The following subcomponents were contained: dysprosium (Dy), which is a rare earth element (Re); manganese (Mn), vanadium (V), and nickel (Ni), which are first additive elements (Me); and silicon (Si), magnesium (Mg), and aluminum (Al).

BaCO₃ and TiO₂ were mixed together, and the resulting mixture was heat-treated, whereby a BaTiO₃ powder was prepared as the main component raw material powder.

The subcomponent raw material was prepared separately from the main component raw material. As the subcomponent raw material, a compound of dysprosium (Dy), nickel (Ni), silicon (Si), magnesium (Mg), manganese (Mn), aluminum (Al), and vanadium (V) was used.

Next, the subcomponent raw material was added to the main component raw material and wet-mixed using a ball mill, and the resulting mixture was dried to obtain a dielectric raw material. A polyvinyl butyral-based binder and ethanol as an organic solvent were added to the obtained dielectric raw material, and the mixture was wet-mixed using a ball mill for a predetermined time, whereby a slurry was prepared. The slurry was molded into sheets, thereby preparing dielectric green sheets.

Next, a conductive paste mainly containing Ni was screenprinted on a surface of each of the obtained dielectric green sheets to form patterned paste layers that were to serve as internal electrode layers. Thereafter, the plurality of the green sheets each having the paste layer formed thereon were placed on top of one another to form a laminate, green sheets devoid of the paste layer were disposed on the upper and lower surfaces of the laminate, and the entirety of the laminate and the green sheets were pressure-bonded, whereby a multilayer block was produced. The obtained multilayer block was cut into multilayer chips using a dicing saw. The laminating process was carried out so that ends where the paste layers were led out alternated with ends where the paste layers were absent. The cutting was performed so that the paste layers were exposed on the side surfaces.

Green sheets for side margin portions were prepared separately from the multilayer chips, and used as side margin green bodies. The green sheets for side margin portions were prepared in the same manner as the dielectric green sheets, except that the blending amounts of the main component raw material and the subcomponent raw material were changed. At this step, in the Examples, the blending amounts were adjusted so that the effective molar ratio (Rm3) of the A site to the B site of the dielectric included in the side margin portions of the fabricated multilayer ceramic capacitors became less than the effective molar ratios (Rm1, Rm2) of the A site to the B site of the dielectric included in the inner layer portion. Next, the green sheets for side margin portions were attached to the opposed side surfaces of the multilayer chips resulting from the cutting, where the paste layers were exposed, whereby green base bodies were fabricated.

The fabricated green base bodies were heat-treated in an N₂ gas stream under the condition of a maximum temperature of 270°C, and further heat-treated in an N₂-H₂O-H₂ gas stream under the condition of a maximum temperature of 800°C. Thereafter, the green base bodies were fired in an N₂-H₂O-H₂ gas stream at an oxygen partial pressure of 1.8×10⁻⁹ MPa to 8.7×10⁻¹⁰ MPa. In the firing, the temperature was lowered to near room temperature immediately after reaching the maximum temperature. Subsequently, the green base bodies were heat-treated in an N₂-H₂O-H₂ gas stream under the conditions of an oxygen partial pressure of 2.3×10⁻¹² MPa to 1.5×10⁻¹¹ MPₐ and a temperature lower than the maximum temperature. In this way, multilayer bodies for multilayer ceramic capacitors were obtained.

The end surfaces of each of the multilayer bodies obtained by way of the firing had the internal electrode layers led out thereto, and a conductive paste containing copper (Cu) as a main component was applied to the end surfaces. Thereafter, the applied conductive paste was baked at 900°C to form a base layer of an external electrode. Furthermore, Ni plating and Sn plating were provided in this order on a surface of the base layer by wet plating. Thus, the multilayer ceramic capacitors were fabricated.

The fabricated multilayer ceramic capacitors each had a dimension in the length direction L of 1.0 mm, a dimension in the width direction W of 2.5 mm, and a dimension in the thickness direction T of 0.5 mm. In the inner layer portion, each dielectric layer had a thickness of 1.0 µm, each internal electrode layer had a thickness of 0.6 µm, and the number of dielectric layers was 350.

### (2) Evaluation

The characteristics of the fabricated multilayer ceramic capacitors were evaluated as follows.

### <SEM Observation>

A WT plane of each multilayer ceramic capacitor was observed using a scanning electron microscope (SEM) to determine the area equivalent diameter D50 and the area equivalent diameter D90 of the dielectric particles included in the central region of the inner layer portion, those of the dielectric particles included in the side margin adjacent regions (first side margin adjacent region, second side margin adjacent region) of the inner layer portion, and those the dielectric particles included in the side margin portions in the vicinities of the surfaces of the multilayer body (a portion in the first side margin portion and in the vicinity of the first side surface, and a portion in the second side margin portion and in the vicinity of the second side surface). Specifically, each multilayer ceramic capacitor was polished to the center in the length (L) direction to expose a cross section (WT plane). Next, the SEM observation was performed on the exposed cross section. The SEM observation of the inner layer portion was performed on the positions P1, P2 (two positions), and P3 (two positions) shown in FIG. 3. The observation was performed in a field of view of 5000 nm×5000 nm.

The area equivalent diameter D50 and the area equivalent diameter D90 were determined based on the cross-sectional areas of individual dielectric particles in the field of view of 5000 nm×5000 nm in the above-described SEM observation. First, for each dielectric particle in the field of view, the area equivalent diameter was calculated based on the cross-sectional area of the dielectric particle. Next, the area equivalent diameter D50 and the area equivalent diameter D90 were calculated based on the data regarding the area equivalent diameter of each dielectric particle in the field of view. The area equivalent diameter D50 and the area equivalent diameter D90 of the dielectric particles in the dielectric included in the central region of the inner layer portion were calculated based on the dielectric particles in the dielectric in the SEM image of the position P1 described above. The area equivalent diameter D50 and the area equivalent diameter D90 of the dielectric particles in the dielectric included in the side margin adjacent regions were calculated as an average value of the values respectively calculated for the two positions P2 described above. The area equivalent diameter D50 and the area equivalent diameter D90 of the dielectric particles in the dielectric in the side margin portions were calculated as an average value of the values respectively calculated for the two positions P3 described above.

### <TEM Observation>

A cross section (WT plane) of each multilayer ceramic capacitor was observed using a transmission electron microscope (TEM), and dielectric particles contained in the central region of the inner layer portion, those in the side margin adjacent regions (the first side margin adjacent region, the second side margin adjacent region) of the inner layer portion, and those of portions in the side margin portions in the vicinities of the surfaces of the multilayer body (a portion in the first side margin portion and in the vicinity of the first side surface, and a portion in the second side margin portion and in the vicinity of the second side surface) were examined. Specifically, each multilayer ceramic capacitor was polished to the center in the length (L) direction to expose a WT plane, and further processed so that flake samples having a WT plane to be observed were taken out. The flake samples were taken from the positions P1, P2 (two positions), and P3 (two positions) shown in FIG. 3, and used as inner layer portion samples and side margin portion-surface vicinity samples, respectively. The observation was performed in a field of view of 1000 nm×1000 nm.

Subsequently, for each sample, each of the dielectric particles in the field of view was subjected to an elemental analysis by TEM-EDX. The elemental analysis was performed on a central portion and a portion located inwardly by a distance of 10 nm from the outer surface of the particle (particle outer peripheral portion) of each particle. However, a particle whose shape is so irregular that its central portion cannot be determined was excluded from the analysis. Then, the concentrations of the rare earth element (Re) and that of titanium (Ti) were examined in the particle outer peripheral portion and the particle central portion of each particle, and the Re concentration distribution ratio ((shell Re/Ti ratio)/(core Re/Ti ratio)) was determined. Particles having a Re concentration distribution ratio of 1.5 or more were determined to be the core-shell particles, and particles having a Re concentration distribution ratio of less than 1.5 were determined to be the homogeneous solid solution particles.

Based on the TEM images, the area occupied by each of the plurality of homogeneous solid solution particles in the cross section was measured for each of the positions P1, P2 (two positions), and positions P3 (two positions). The measured areas were summed to determine the areas (As1, As2, As3) occupied by the homogeneous solid solution particles. Likewise, the area occupied by each of the plurality of core-shell particles in the cross section was measured based on the TEM images for each of the positions P1, P2 (two positions), and positions P3 (two positions). The measured areas were summed to obtain areas (Ac1, Ac2, Ac3) occupied by the core-shell particles. For each of the three types of positions P1, P2 (two positions), and P3 (two positions), the ratio (RA1 = As1/Ac1, RA2 = As2/Ac2, RA3 = As3/Ac3) of the area occupied by the homogeneous solid solution particles to the area occupied by the core-shell particles was obtained by dividing the area (As1, As2, As3) occupied by the homogeneous solid solution particles by the area (Ac1, Ac2, Ac3) occupied by the core-shell particles. The above-described ratio, RA1 = As1/Ac1, in the central region of the inner layer portion was calculated based on the dielectric particles in the dielectric in the TEM image of the position P1 described above. The above-described ratio, RA2 = As2/Ac2, in the side margin adjacent regions of the inner layer portion is calculated as an average value of the values respectively calculated for the two positions P2 described above. The above-described ratio, RA3 = As3/Ac3, in the side margin portions is calculated as an average value of the values respectively calculated for the two positions P3 described above.

### <ICP Analysis>

Samples were taken by scraping part of the dielectric layer off from the above-described positions P1, P2 (two positions) and P3 (two positions), of the multilayer ceramic capacitor, and were subjected to an ICP analysis so that a concentration of each element in the dielectric was determined. Specifically, the scraped samples were treated with a solution by alkali fusion method, and the solution was subjected to the ICP analysis. In the ICP analysis, an effective molar ratio (Rm1, Rm2, Rm3) of the A site to the B site was calculated for each of the three types of positions P1, P2 (two positions), and P3 (two positions). More specifically, the first effective molar ratio Rm1 indicating the effective molar ratio (A/B ratio) of the A site to the B site in the dielectric layer in the central region, the second effective molar ratio Rm2 indicating the effective molar ratio (A/B ratio) of the A site to the B site in the first side margin adjacent region and the second side margin adjacent region, and the third effective molar ratio Rm3 indicating the effective molar ratio (A/B ratio) of the A site to the B site in the dielectric included in the first side margin portion and the second side margin portion were calculated.

In the inner layer portion of each of the Examples, the first effective molar ratio Rm1 indicating the effective molar ratio (A/B ratio) of the A site to the B site of the dielectric layer in the central region and the second effective molar ratio Rm2 indicating the effective molar ratio (A/B ratio) of the A site to the B site in the first side margin adjacent region and the second side margin adjacent region were substantially equal to each other, and were each 1.0000 or greater and 1.0020 or less. In each of the Examples, the third effective molar ratio Rm3 indicating the effective molar ratio (A/B ratio) of the A site to the B site of the dielectric included in the side margin portions (the first side margin portion, the second side margin portion) was 0.990 or greater and 0.998 or less, which was less than the first effective molar ratio Rm1 and the second effective molar ratio Rm2. In the Examples, Ba and Ca were included as the elements of the A site, Ti and Zr were included as the elements of the B site, and the effective molar ratios Rm1 to Rm3 were calculated according to the following: (Ba + Ca)/(Ti + Zr). The effective molar ratio Rm1 of the central region of the inner layer portion was calculated based on the analysis of the sample taken from the position P1. The effective molar ratio Rm2 of the side margin adjacent regions of the inner layer portion was calculated as an average value of the values respectively calculated for the two positions P2 described above. The effective molar ratio Rm3 of the side margin portions was calculated as an average value of the values respectively calculated for the two positions P3 described above.

### <Effective Capacitance>

The effective capacitance was evaluated by a test for measurement of DC bias characteristics. For each of the multilayer ceramic capacitors of the Examples, a capacitance when a DC voltage was not applied and a capacitance when a DC voltage (12.5 V) was applied were measured, and the ratio of decrease in the capacitance due to the application of the DC voltage was examined. The multilayer ceramic capacitors of the Examples were compared with a comparative multilayer ceramic capacitor in which the dielectric particles in the dielectric layer in the first side margin adjacent region and the second side margin adjacent region had a smaller area equivalent diameter D50 than the dielectric particles in the dielectric layer in the central region. The multilayer ceramic capacitors of the Examples having better DC bias characteristics than the comparative multilayer ceramic capacitor were determined as "OK". The comparative multilayer ceramic capacitor was fabricated by blending the materials in adjusted amounts so that the effective molar ratio (Rm3) of the A site to the B site of the dielectric included in the side margin portions became greater than the effective molar ratios (Rm1, Rm2) of the A site to the B site of the dielectric included in the inner layer portion.

### <Reliability Test>

As a reliability test, a highly accelerated life test (HALT) was performed by applying a predetermined DC voltage (30 V) to the multilayer ceramic capacitors at a high ambient temperature (170°C). The point in time at which the insulation resistance decreased to a predetermined value or less was regarded as the occurrence of a failure, and the test results were subjected to Weibull analysis to calculate a mean time to failure (MTTF). The multilayer ceramic capacitors of the Examples were compared with a comparative multilayer ceramic capacitor in which the dielectric particles in the dielectric layer in the first side margin adjacent region and the second side margin adjacent region had a smaller area equivalent diameter D50 of than the dielectric particles in the dielectric layer in the central region. The multilayer ceramic capacitors of the Examples having a longer MTTF than the comparative multilayer ceramic capacitor were determined to have suitable reliability ("OK"). The comparative multilayer ceramic capacitor was fabricated by blending the materials in adjusted amounts so that the effective molar ratio (Rm3) of the A site to the B site of the dielectric included in the side margin portions became greater than the effective molar ratios (Rm1, Rm2) of the A site to the B site of the dielectric included in the inner layer portion.

### (3) Evaluation Results

The evaluation results of Examples 1 to 5 are shown in Table 1.

**[Table 1]**

| | | Example 1 | Example 2 | Example 3 | Example 4 | Example 5 |
|---|---|---|---|---|---|---|
| D50 ( n m) | Central Region | 245 | 241 | 248 | 238 | 208 |
| | Side Margin Adjacent Region | 299 | 333 | 314 | 306 | 289 |
| D90 ( n m) | Central Region | 370 | 380 | 384 | 347 | 322 |
| | Side Margin Adjacent Region | 512 | 511 | 490 | 460 | 408 |
| Effective Capacitance | Evaluation Results | OK | OK | OK | OK | OK |
| Reliability Test | Evaluation Results | OK | OK | OK | OK | OK |

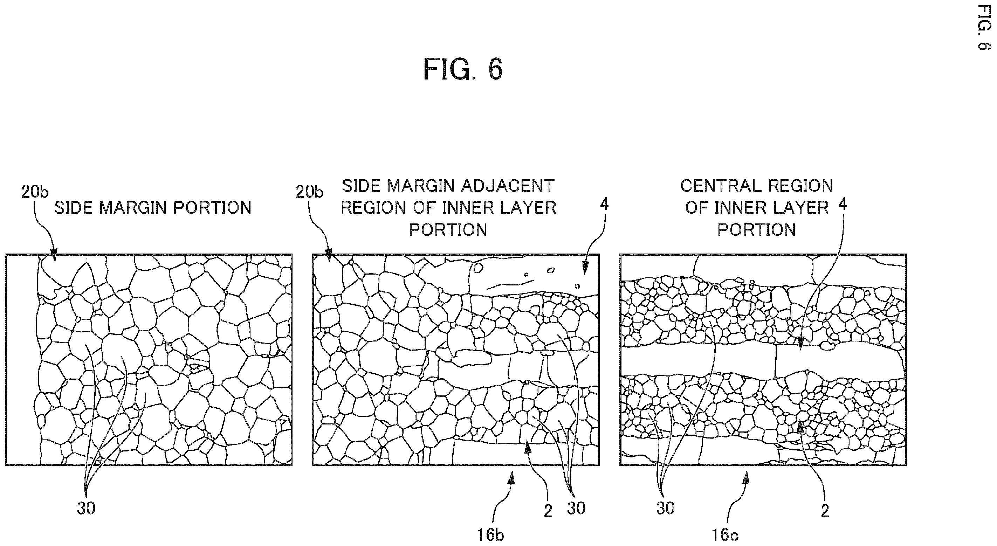

FIG. 6 schematically illustrates SEM images of the side margin portion, the side margin adjacent region of the inner layer portion, and the central region of the inner layer portion of the multilayer ceramic capacitor of the Examples, taken in a cross section across the center in the length direction of the multilayer ceramic capacitor. The SEM images schematically shown in FIG. 6 are of Example 2 as a representative of the Examples. The diagram denoted as the side margin portion in FIG. 6 corresponds to the position P3 adjacent to the second side surface in FIG. 3. The diagram denoted as the side margin adjacent region of the inner layer portion in FIG. 6 generally corresponds to the position P2 adjacent to the second side surface in FIG. 3. However, the diagram denoted as the side margin adjacent region of the inner layer portion in FIG. 6 shows, in the left side portion, a portion of the side margin portion (20b). The diagram denoted as the central region of the inner layer portion in FIG. 6 corresponds to the position P1 in FIG. 3. From FIG. 6, it can be confirmed that the dielectric particles in the regions have different particle diameters.

As shown in Table 1, in Examples 1 to 5, the area equivalent diameter D50 of the dielectric particles in the dielectric layer in the first side margin adjacent region and the second side margin adjacent region is larger than the area equivalent diameter D50 of the dielectric particles in the dielectric layer in the central region. In Examples 1 to 5, the area equivalent diameter D90 of the dielectric particles in the dielectric layer in the first side margin adjacent region and the second side margin adjacent region is larger than the area equivalent diameter D90 of the dielectric particles in the dielectric layer in the central region.

Here, in Example **2,** the area equivalent diameter D50 and the area equivalent diameter D90 of the dielectric particles of the dielectric in the side margin portions were measured. In Example 2, the area equivalent diameter D50 of the dielectric particles in the dielectric layer in the first side margin adjacent region and the second side margin adjacent region was 442 nm. In Example 2, the area equivalent diameter D90 of the dielectric particles in the dielectric layer in the first side margin adjacent region and the second side margin adjacent region was 600 nm. The area equivalent diameter D50 of the dielectric particles of the dielectric in the first side margin portion and the second side margin portion is larger than the area equivalent diameter D50 of the dielectric particles in the dielectric layer in the central region. The area equivalent diameter D50 of the dielectric particles of the dielectric in the first side margin portion and the second side margin portion is larger than the area equivalent diameter D50 of the dielectric particles of the dielectric layer in the first side margin adjacent region and the second side margin adjacent region. The others of the Examples have the same tendency.

Here, in Example 2, the ratio of the area occupied by the homogeneous solid solution particles to the area occupied by the core-shell particles in each region was calculated. In Example 2, the ratio RA1 (= As1/Ac1) of the area (As1) occupied by the homogeneous solid solution particles to the area (Ac1) occupied by the core-shell particles in the dielectric layer in the central region was 0.4. The ratio RA2 (= As2/Ac2) of the area (As2) occupied by the homogeneous solid solution particles to the area (Ac2) occupied by the core-shell particles in the dielectric layer in the first side margin adjacent region and the second side margin adjacent region was 1.5. The ratio RA3 (= As3/Ac3) of the area (As3) occupied by the homogeneous solid solution particles to the area (Ac3) occupied by the core-shell particles of the dielectric in the first side margin portion and the second side margin portion was 3.5. The ratio RA2 (= As2/Ac2) of the area (As2) occupied by the homogeneous solid solution particles to the area (Ac2) occupied by the core-shell particle of the dielectric layer in the first side margin adjacent region and the second side margin adjacent region is greater than the ratio RA1 (= As1/Ac1) of the area (As1) occupied by the homogeneous solid solution particles to the area (Ac1) occupied by the core-shell particles of the dielectric layer of the central region. The ratio RA3 (= As3/Ac3) of the area (As3) occupied by the homogeneous solid solution particles to the area (Ac3) occupied by the core-shell particles of the dielectric in the first side margin portion and the second side margin portion is greater than the ratio RA2 (= As2/Ac2) of the area (As2) occupied by the homogeneous solid solution particles to the area (Ac2) occupied by the core-shell particles in the dielectric layer of the first side margin adjacent region and the second side margin adjacent region. The others of the Examples have the same tendency.

In comparison with the comparative multilayer ceramic capacitor in which the area equivalent diameter D50 of the dielectric particles of the dielectric layer in the first side margin adjacent region and the second side margin adjacent region is smaller than the area equivalent diameter D50 of the dielectric particles in the dielectric layer in the central region, all of Examples 1 to 5 in which the area equivalent diameter D50 of the dielectric particles of the dielectric layer in the first side margin adjacent region and the second side margin adjacent region is larger than the area equivalent diameter D50 of the dielectric particles of the dielectric layer in the central region have better DC bias characteristics and exhibit better evaluation results of the effective capacitance. Furthermore, Examples 1 to 5 all exhibit better results in the reliability test.

In the central region of the inner layer portion, the progress of sintering of the dielectric particles is retarded so that the grain growth of the dielectric particles after the end of the sintering step is suppressed to a low level, whereas in the side margin adjacent regions, the progress of sintering is promoted so that the grain growth of the dielectric particles after the end of the sintering step is enhanced, thereby making it possible to improve the reliability while increasing the effective capacitance.

In the central region of the inner layer portion, the progress of sintering of the dielectric particles is retarded so that the grain growth of the dielectric particles after the end of the sintering step is suppressed to a low level, whereas in the side margin portions, the progress of sintering is promoted so that the grain growth of the dielectric particles after the end of the sintering step is further enhanced as compared with the side margin adjacent regions, thereby making it possible to further improve the reliability while increasing the effective capacitance.

In the central region of the inner layer portion, the progress of sintering of the dielectric particles is retarded, whereas in the side margin adjacent regions, the progress of sintering is promoted so that progress of the formation of solid solution of the rare earth atoms is enhanced, thereby making it possible to improve the reliability while increasing the effective capacitance.

In the central region of the inner layer portion, the progress of sintering of the dielectric particles is retarded, whereas in the side margin portions, the progress of sintering is promoted so that the formation of solid solution of the rare earth atoms is further enhanced than in the side margin adjacent regions, thereby making it possible to improve the reliability while increasing the effective capacitance.

It should be noted that the present invention is not limited to the embodiment descried above and can be appropriately modified and applied without changing the spirit of the present invention. Moreover, a combination of two or more of the individual preferred configurations described in the above embodiment is also encompassed in the present invention.

### EXPLANATION OF REFERENCE NUMERALS

2 Dielectric layer
4 Internal electrode layer
6 Multilayer body
8a First external electrode
8b Second external electrode
10a First main surface
10b Second main surface
12a First side surface
12b Second side surface
14a First end surface
14b Second end surface
16 Inner layer portion
16a First side margin adjacent region
16b Second side margin adjacent region
16c Central region
18a First outer layer portion
18b Second outer layer portion
20a First side margin portion
20b Second side margin portion
30 Core-shell particle
32 Core portion
34 Shell portion
100 Multilayer ceramic capacitor

## Claims

1. A multilayer ceramic capacitor comprising:
a multilayer body having a first main surface and a second main surface opposed to each other in a thickness direction, a first side surface and a second side surface opposed to each other in a width direction, and a first end surface and a second end surface opposed to each other in a length direction, the multilayer body including a plurality of dielectric layers and a plurality of internal electrode layers laminated in the thickness direction; and
a pair of external electrodes respectively provided on the first end surface and the second end surface, and connected to the plurality of internal electrode layers,
wherein the multilayer body is sectioned into
a first side margin portion extending along the first side surface and not including the internal electrode layers,
a second side margin portion extending along the second side surface and not including the internal electrode layers,
a first outer layer portion sandwiched between the first side margin portion and the second side margin portion and sandwiched between the first main surface and the internal electrode layer closest to the first main surface,
a second outer layer portion sandwiched between the first side margin portion and the second side margin portion and sandwiched between the second main surface and the internal electrode layer closest to the second main surface, and
an inner layer portion sandwiched between the first side margin portion and the second side margin portion and sandwiched between the first outer layer portion and the second outer layer portion,
wherein in a cross section across a center in the length direction of the multilayer ceramic capacitor,
the inner layer portion includes a central region that is located at a center in the width direction, a first side margin adjacent region that is adjacent to the first side margin portion, and a second side margin adjacent region that is adjacent to the second side margin portion, and
wherein dielectric particles in the dielectric layer in the first side margin adjacent region and the second side margin adjacent region have a larger area equivalent diameter D50 than dielectric particles in the dielectric layer in the central region.

2. The multilayer ceramic capacitor according to claim 1, wherein
dielectric particles in a dielectric in the first side margin portion and the second side margin portion have a larger area equivalent diameter D50 than the dielectric particles in the dielectric layer in the first side margin adjacent region and the second side margin adjacent region.

3. The multilayer ceramic capacitor according to claim 1 or 2, wherein
a dielectric included in the inner layer portion comprises dielectric particles containing barium (Ba) and titanium (Ti) and comprises a rare earth element (Re) as a subcomponent,
the dielectric particles of the dielectric in the inner layer portion comprise core-shell particles and homogeneous solid solution particles,
a ratio RA2 (= As2/Ac2) of an area (As2) occupied by the homogeneous solid solution particles to an area (Ac2) occupied by the core-shell particles in the dielectric layer in the first side margin adjacent region and the second side margin adjacent region is greater than a ratio RA1 (= As1/Ac1) of an area (As1) occupied by the homogeneous solid solution particles to an area (Ac1) occupied by the core-shell particles in the dielectric layer in the central region.

4. The multilayer ceramic capacitor according to claim 3, wherein
a dielectric included in the first side margin portion and the second side margin portion comprises dielectric particles containing barium (Ba) and titanium (Ti) and comprises a rare earth element (Re) as a subcomponent,
the dielectric particles of the dielectric in the first side margin portion and the second side margin portion comprise core-shell particles and homogeneous solid solution particles,
a ratio RA3 (= As3/Ac3) of an area (As3) occupied by the homogeneous solid solution particles to an area (Ac3) occupied by the core-shell particles of the dielectric in the first side margin portion and the second side margin portion is greater than the ratio RA2 (= As2/Ac2) of the area (As2) occupied by the homogeneous solid solution particles to the area (Ac2) occupied by the core-shell particles in the dielectric layer in the first side margin adjacent region and the second side margin adjacent region.

5. The multilayer ceramic capacitor of claim 3 or 4, wherein
the rare earth element (Re) comprises dysprosium (Dy).

6. The multilayer ceramic capacitor of claim 1 or 2, wherein
the inner layer portion comprises a dielectric having a perovskite (ABO₃) structure, and the first side margin portion and the second side margin portion comprise a dielectric having a perovskite (ABO₃) structure,
a third effective molar ratio Rm3 indicating an effective molar ratio (A/B ratio) of an A site to a B site of the dielectric included in the first side margin portion and the second side margin portion is less than a second effective molar ratio Rm2 indicating an effective molar ratio (A/B ratio) of an A site to a B site in the first side margin adjacent region and the second side margin adjacent region, and
the third effective molar ratio Rm3 indicating the effective molar ratio (A/B ratio) of the A site to the B site of the dielectric included in the first side margin portion and the second side margin portion is less than a first effective molar ratio Rm1 indicating an effective molar ratio (A/B ratio) of an A site to a B site of the dielectric layer in the central region.
